# EUROPÄISCHE PATENTSCHRIFT

(11) **EP 3 625 158 B1**
(45) Veröffentlichungstag und Bekanntmachung des Hinweises auf die Patenterteilung: **12.07.2023**
(21) Anmeldenummer: 18719597.9
(22) Anmeldetag: 02.05.2018
(51) Int. Cl.: B65G 63/00, B65G 61/00, B01F 33/80

(54) **MODULARES PRODUKTIONSSYSTEM UND VERFAHREN FÜR FORMULIERUNGEN**
MODULAR PRODUCTION SYSTEM AND METHOD FOR FORMULATIONS
SYSTÈME DE PRODUCTION MODULAIRE ET PROCÉDÉ POUR FORMULATIONS

(30) Priorität: 19.05.2017 EP 17171923
(43) Veröffentlichungstag der Anmeldung: 25.03.2020
(73) Patentinhaber: BASF Coatings GmbH, 48165 Münster (DE)
(72) Erfinder: JOEGE, Frank, 48165 M nster (DE); HUESER, Bernhard, 48165 M nster (DE); BERG, Ralf, 48165 M nster (DE); GROETSCH, Stefan, 48165 M nster (DE); FOUILLET, Jeremy, 48165 M nster (DE); KOLBE, Michael, 48165 M nster (DE); BERG, Jan, 48165 M nster (DE)
(74) Vertreter: BASF IP Association
(86) Internationale Anmeldenummer: PCT/EP2018/061136
(87) Internationale Veröffentlichungsnummer: WO 2018/210559

(56) Entgegenhaltungen:
- EP-A2- 3 244 174
- US-A- 4 525 071

## Beschreibung

Die vorliegende Erfindung betrifft ein neues modulares Produktionssystem für Formulierungen. Die vorliegende Erfindung betrifft zudem ein Verfahren zur Herstellung von Formulierungen, beispielsweise Lacken, unter Einsatz des modularen Produktionssystems.

### Stand der Technik

Formulierungen, das heißt mehr oder minder komplexe Vielkomponentensysteme, und deren Herstellung sind zentraler Bestandteil verschiedenster Industriezweige. Beispielhaft seien die Lackindustrie, die Lebensmittelindustrie oder auch die Medizinindustrie genannt. Entsprechende Formulierungen werden durch physikalisches Mischen flüssiger (fließfähiger) und fester Stoffe (Rohstoffe) hergestellt. In der Regel werden die zur Produktion notwendigen Feststoffe (beispielsweise Pigmente und Füllstoffe in der Lackindustrie) in vorgelagerten Schritten in eine flüssige Form (Pasten, Mahlgüter) überführt und dann in Form dieser Zwischenprodukte in der eigentlichen Produktion eingesetzt. Ebenfalls oft in Form solcher Zwischenprodukte werden vorgemischte Rohstoffe wie Harze, Lösemitteln und Additive (als Mischlacke) in der Produktion eingesetzt.

Die hohe Bandbreite an herzustellenden Produkten, das heißt Formulierungen, die in der industriellen Produktion besteht, geht häufig einher mit einer ebenfalls enormen Komplexität an einzusetzenden Rohstoffen und Zwischenprodukten (gemeinsam auch Einsatzstoffe zur Produktion von Formulierungen genannt). Typische Größenordnungen beispielsweise im Bereich der Automobillackproduktion liegen im Bereich von etwa 100 bis 1000 Einsatzstoffen und teils über 1000 Produkten (fertigen Lacken sowie vollständigen Komponenten von Lacken, insbesondere Stammlacke und Härterkomponenten bei Zweikomponentenlacken) in verschiedenen Produktfamilien (Grundierungen, Füller, Basislacke, Klarlacke und so weiter). Dies führt dazu, dass viele Produkte nur unregelmäßig, in kleinen Mengen und als Stückgüter produziert werden. Auch die Einsatzstoffe werden demzufolge in großen Anteilen als Stückgüter zum Einsatz gebracht.

Um der Komplexität hinsichtlich der Einsatzstoffe zu begegnen, gibt es im Stand der Technik verschiedene Ansätze, die nach wie vor gängige Form der Chargenproduktion in einen kontinuierlichen oder semi-kontinuierlichen Produktionsprozess zu überführen, wobei die Einsatzstoffe beispielsweise über eine Hauptleitung zudosiert und darin bereits vorgemischt werden oder auch direkt über individuelle Zuleitungen in eine Mischvorrichtung gegeben werden. Dabei sind zur Einstellung der notwendigen Massenflussraten der Einsatzstoffe zum Erhalt eines innerhalb der Spezifikationen liegenden Produkts sowie zur kontinuierlichen Qualitätskontrolle des herzustellenden Produkts verschiedenste Messvorrichtungen vorgesehen, die wichtige Kenngrößen des Produkts wie Viskosität, pH-Wert oder auch Farbe während des Produktionsprozesses am nassen Material erfassen. Dabei hergestelltes Formulierungsmaterial, welches außerhalb der Spezifikationen liegt, wird verworfen oder aufwendig über Zirkulationsleitungssysteme wieder in den Hauptstrom der Einsatzmaterialien und/oder die Mischvorrichtung sukzessive eindosiert und dort mit dem nach Einstellung der korrekten Produktionsparameter herzustellenden Material zu einem nach wie vor innerhalb der Spezifikationen liegenden Produkt verschnitten. Die kontinuierlich oder semi-kontinuierlich produzierte Formulierung wird dann über entsprechende Abfüllanlagen in bestimmte Ladeeinheiten (Emballagen für die Auslieferung) überführt und als Stückgut ausgel i efe rt.

Entsprechende Konzepte und/oder Messvorrichtungen, insbesondere zur nasschemischen Messung der Farbeigenschaften von Lacken wie Automobillacken, sind in WO 2013/081812 A1, WO 99/41003 A1, WO 2004/081685 A1 oder WO02/075285 A2 beschrieben.

Auf die beschriebene Weise kann es zumindest gelingen, die eigentliche Produktion von Formulierungen, insbesondere Lacken, zu vereinfachen beziehungsweise effizienter zu gestalten.

Allerdings übersehen die bekannten Konzepte die Tatsache, dass nicht nur die Komplexität bei der Herstellung einer bestimmten Formulierung eine Kernherausforderung darstellt.

Deutlich schwieriger ist es, zusätzlich die in der industriellen Produktion gewünschte Herstellung unterschiedlichster Formulierungen mit unterschiedlichsten Eigenschaften und vielen unterschiedlichen Einsatzstoffen angemessen zu bewältigen.

Zu beachten ist dabei die mit der Produktion einhergehende Relevanz eines gezielten Transports der für die Produktion notwendigen Einsatzstoffe (von denen ein großer Anteil ebenfalls Stückgüter darstellen) von einer zentralen Bereithaltungseinheit zu Übergabepunkten an die Produktionsstätte. Genauso relevant ist die kontrollierte Einlagerung der Einsatzstoffe in die Bereithaltungseinheit. In vielen Bereichen, insbesondere im Bereich der Lackproduktion, ist es zudem notwendig, unterschiedliche Einsatzstoffe vor ihrem Einsatz gezielt vorzubehandeln (Homogenisieren durch Schütteln, Aufrühren und/oder Taumeln sowie Erwärmen). Ebenfalls wichtig ist es in diesem Zusammenhang, die als Stückgüter anfallenden Produkte (nach Füllung in entsprechende Lieferemballagen) eindeutig zu kennzeichnen, bis zum Versand an einen Kunden einzulagern und bei Versandauftrag gezielt zu einem geeigneten Auslagerungspunkt zur Verladung zu befördern.

Dokument US 4 525 071 A offenbart ein Produktionssystem gemäß dem Oberbegriff des Anspruchs 1.

### Aufgabe

Aufgabe der vorliegenden Erfindung war es, ein System bereitzustellen, dass nicht nur die industrielle Produktion von unterschiedlichen Formulierungen ermöglicht, sondern sich zudem des Problems der effektiven Organisation von Bereithaltung; Bereitstellung, Aufnahme und Auslagerung der zu großen Anteilen als Stückgüter anfallenden Einsatzstoffe und Produkte annimmt. Das System sollte dabei so ausgestaltet sein, dass es einerseits die kontrollierte Aufnahme sowie die gezielte und durch den Produktionsablaufplan bestimmte Beförderung von als Stückgüter anfallenden Einsatzstoffen von einer Bereithaltungseinheit zur Produktionsstätte ermöglicht, andererseits einen entsprechend gesteuerten Transport der hergestellten Produkte von der Produktionsstätte zu einer Aufnahmeeinheit sowie die kontrollierte Ein- beziehungsweise Zwischenlagerung und auch Auslagerung dieser Produkte gewährleistet.

### Technische Lösung

Gefunden wurde ein neues modulares Produktionssystem nach Anspruch 1.

Das neue modulare Produktionssystem wird in der Folge auch als erfindungsgemäßes Produktionssystem bezeichnet und ist demnach Gegenstand der vorliegenden Erfindung. Bevorzugte Ausführungen und weitere Gegenstände der vorliegenden Erfindung sind der folgenden Beschreibung sowie den Unteransprüchen zu entnehmen.

Durch das neue modulare Produktionssystem gelingt es, eine effektive und teilweise oder vollständig automatisierte Organisation der Handhabung von als Stückgüter anfallenden Einsatzstoffen und Produkten sowie entsprechender Ladeeinheiten, die mit den Stückgütern befüllt sind oder zu befüllen sind, zu gewährleisten. Es gelingt insbesondere, zu gewährleisten, dass innerhalb eines komplexen Produktionssystems die Zuführung, Bereithaltung und Bereitstellung, Auslagerung und gegebenenfalls Vorbehandlung von Stückgütern und Ladeneinheiten zur richtigen Zeit am richtigen Ort erfolgt und hierdurch ein enorm effektiver Produktionsprozess - ausgehend von der Zuführung der Einsatzstoffe bis zur Auslagerung von Produkten - ermöglicht wird.

### Beschreibung

### Produktionssystem

Das erfindungsgemäße Produktionssystem ist ein modulares System. Es besteht demnach aus mehreren Modulen beziehungsweise Einheiten, insbesondere einer Einheit (1) für die Produktion und Abfüllung von Formulierungen sowie einer mit Einheit (1) gekoppelten Einheit (2) zur Aufnahme und Auslagerung von Stückgütern (S) und Ladeeinheiten (L) sowie zur Bereitstellung von Stückgütern (S).

Der Terminus Modul oder Einheit oder Untereinheit umschreibt dabei erfindungsgemäß die abgrenzbaren Eigenschaften und individuellen Funktionen des jeweiligen Moduls beziehungsweise der jeweiligen Einheit oder Untereinheit. Es ist nicht notwendig, dass zwei Einheiten räumlich beziehungsweise physisch klar voneinander getrennt sind und/oder das eine Einheit einen für sich räumlich und/oder physisch individualisierten Bereich darstellt. So kann beispielsweise eine Bereitstellungsuntereinheit viele unterschiedliche Bereiche, in denen die Vorrichtungen (V) angeordnet sind, umfassen. Diese Bereiche können jeweils direkt neben- oder übereinanderliegen. Genauso können sie aber auch ganz oder teilweise räumlich voneinander getrennt vorliegen, wobei dann beispielsweise andere Bereiche, Einheiten oder Teile von Einheiten des Produktionssystems in entsprechenden Trennbereichen angeordnet sind.

Das erfindungsgemäße modulare Produktionssystem umfasst zunächst eine Einheit (1) für die Produktion und Abfüllung von Formulierungen, bevorzugt flüssigen Formulierungen. Der Ausdruck "Einheit für die Produktion und Abfüllung von Formulierungen" bedeutet augenscheinlich, dass die Einheit für die Produktion und Abfüllung von Formulierungen geeignet sein muss. Grundsätzlich vorstellbar ist hierbei zunächst jedwede dem Fachmann bekannte Form der Produktions- und Abfüllungseinheit. Als einziges vorgegebenes Kriterium ist zu beachten, dass die Einheit (1) Mittel aufweisen muss, über die die automatisiert aus Einheit (2) überführten, definierten Mengen von Stückgütern für die Produktion von Formulierungen aufgenommen werden können (siehe auch das weiter unten erläuterte Merkmal (V.3), aus welchem sich implizit das im Vorsatz genannte Merkmal der Einheit (1) ergibt).

Stückgüter (S) für die Produktion von Formulierungen sind gleichzusetzen mit als Stückgüter (S) anfallende Rohstoffe und Zwischenprodukte.

Es ist bevorzugt, dass die Einheit (1) zudem geeignet ist, jedwede Form von flüssigen Zwischenprodukten herzustellen und abzufüllen. Dies gilt sowohl für aus festen und flüssigen Rohstoffen hergestellte Zwischenprodukte, als auch aus nur flüssigen Rohstoffen hergestellte Zwischenprodukte. Genauso gilt dies für Zwischenprodukte, die aus zuvor hergestellten Zwischenprodukten oder aus zuvor hergestellten Zwischenprodukten und festen und/oder flüssigen Rohstoffen hergestellt werden. Die Einheit (1) ist somit bevorzugt geeignet, beispielsweise Pigmentpasten und Mischlacke herzustellen. Diese Pigmentpasten und Mischlacke können dann wiederum als Einsatzstoff zur Herstellung von Formulierungen (das heißt Produkten) eingesetzt werden.

Weitere bevorzugte Ausführungsformen der Einheit (1) sind weiter unten beschrieben.

### Einheit (2)

Das erfindungsgemäße modulare Produktionssystem umfasst zudem eine mit Einheit (1) gekoppelten Einheit (2) zur Aufnahme und Auslagerung von Stückgütern (S) und Ladeeinheiten (L) sowie zur Bereitstellung von Stückgütern (S).

Die Formulierung "Einheit zur Aufnahme und Auslagerung von Stückgütern (S) und Ladeeinheiten (L) sowie zur Bereitstellung von Stückgütern (S)" bedeutet augenscheinlich, dass die Einheit für die Aufnahme und Auslagerung von Stückgütern (S) und Ladeeinheiten (L) sowie zur Bereitstellung von Stückgütern (S) geeignet sein muss.

Die Einheit (2) ist mit der Einheit (1) gekoppelt. Die beiden Einheiten stehen also miteinander in Kontakt und sind miteinander verbunden. Diese Verbindung besteht zumindest, aber nicht zwingend ausschließlich in Form der weiter unten noch genauer beschriebenen Mittel (V.3); das heißt Mitteln zur Überführung definierter Mengen von Stückgütern in die Einheit (1).

Die Einheit (2) umfasst zunächst eine Untereinheit (2.1) zur Bereithaltung von leeren Ladeeinheiten (L) und mit Stückgütern befüllten Ladeeinheiten (L).

Die Formulierung "Bereithaltung" ist im Rahmen der vorliegenden Erfindung insbesondere auch in Abgrenzung zu dem Begriff Bereitstellung wie folgt zu verstehen. Während eine "Bereitstellung" einer Komponente zeitlich und physisch betrachtet das direkte und unmittelbare zur Verfügung stellen dieser Komponente bedeutet, ist mit "Bereithaltung" einer Komponente die in Vorbereitung und Erwartung der notwendigen Bereitstellung getätigte Kurzzeitlagerung dieser Komponente gemeint. Diese Kurzzeitlagerung findet dann an einer Position statt, aus der die Komponente auf einfache Art zum Ort der Bereitstellung transportiert werden kann. Insbesondere ist grundsätzlich nicht angedacht, die Komponente am Ort der Bereithaltung längerfristig zu lagern, wie dies beispielsweise in hierfür vorgesehenen Lagern geschieht. Unter einer Kurzzeitlagerung im Sinne der Bereithaltung ist hier insbesondere eine Lagerung von bis zu 48 Stunden, gerechnet von der Aufnahme einer Komponente in die Untereinheit (2.1) bis zur Verwendung oder ersten Verwendung, zu verstehen. Die Angabe erste Verwendung bezieht sich auf weiter unten genauer beschriebene standardisierte Ladeeinheiten (sL), die mit Einsatzstoffen, das heißt Rohstoffen oder Zwischenprodukten, befüllt sind und aus denen im Rahmen der ersten Verwendung lediglich ein Teil des Einsatzstoffes entnommen wird. Aus diesem Grund wird die dann teilentleerte Ladeeinheit wieder zurück an ihre Position in der Bereithaltungseinheit (2.1) transportiert und bis zur nächsten Verwendung bereitgehalten.

Bei den leeren Ladeeinheiten (L) kann es sich beispielsweise um Einweglieferemballagen und Mehrweglieferemballagen handeln, die bereitgehalten werden, um sie bei Bedarf manuell oder automatisiert unter Passieren der unten beschriebenen Auslagerungseinheit zur Einheit (1) befördern zu können, um dort produzierte Formulierungen abfüllen zu können. Entsprechende leere Mehrweglieferemballagen werden augenscheinlich bevorzugt vor der Aufnahme und Bereithaltung in Einheit (2) gereinigt.

Bei mit Stückgütern (S) befüllten Ladeeinheiten (L) kann es sich um Einweglieferemballagen und Mehrweglieferemballagen handeln, die in der Einheit (1) mit dort produzierten Produkten (Formulierungen) befüllt wurden, über die nachstehend beschriebene Untereinheit (2.2) in die Einheit (2) aufgenommen wurden und anschließend bis zur Auslagerung über die nachstehend beschriebene Untereinheit (2.3) zur Einlagerung in ein Lager zur längerfristigen Lagerung oder zur direkten Auslieferung an einen Kunden bereitgehalten werden sollen.

Bei mit Stückgütern (S) befüllten Ladeeinheiten (L) kann es sich insbesondere auch um von Rohstofflieferanten in bestimmten Ladeeinheiten angelieferte Rohstoffe handeln (mit Rohstoffen befüllte Originalgebinde). Solche Ladeeinheiten werden beispielsweise bereitgehalten, um eine anlassbezogene Umfüllung in standardisierte Ladeeinheiten (sL) zu ermöglichen. Genauso kann es sich also um wie weiter unten genauer beschriebene standardisierte Ladeeinheiten (sL) handeln, die mit Einsatzstoffen, das heißt Rohstoffen oder Zwischenprodukten, befüllt sind. Eine solche Befüllung mit Rohstoffen findet bevorzugt in dem weiter unten beschriebenen bevorzugten Modul (3) zur Umfüllung von Rohstoffen aus Originalgebinden in standardisierte Ladeeinheiten (sL) statt. Eine solche Befüllung mit Zwischenprodukten findet bevorzugt in der Einheit (1) statt, welche wie oben beschrieben bevorzugt auch zur Produktion von Zwischenprodukten geeignet ist. Die Bereithaltung dieser Komponenten ermöglicht dann die anlassbezogene Bereitstellung der Komponenten für die Produktion über die Untereinheit 2.4).

Bei den leeren Ladeeinheiten (L) kann es sich demzufolge beispielsweise auch um entleerte Originalgebinde handeln, die beispielsweise aus dem Modul (3) aufzunehmen sind, um über das Modul (2) aus dem Gesamtsystem (das heißt dem modularen Produktionssystem) ausgeschleust zu werden, jedoch aufgrund anderer höher priorisierter Prozesse keine direkte Ausschleusung stattfinden kann. Insbesondere aber kann es sich auch um standardisierte Ladeeinheiten (sL) handeln, die bereitgehalten werden sollen, um mit Rohstoffen und/oder Zwischenprodukten befüllt zu werden. Entsprechende leere Ladeeinheiten (sL) werden augenscheinlich bevorzugt vor der Aufnahme und Bereithaltung in Einheit (2) gereinigt.

Die Einheit (2.1) dient bevorzugt der Bereithaltung von leeren Ladeeinheiten (L) und mit Stückgütern (S) befüllten Ladeeinheiten (L), wobei hierbei zumindest, aber nicht zwingend ausschließlich
(i) leere Einweglieferemballagen und Mehrweglieferemballagen,
(ii) mit Formulierungen befüllte Einweglieferemballagen und Mehrweglieferemballagen,
(iii) mit Rohstoffen befüllte Originalgebinde
(iv) mit Rohstoffen befüllte standardisierte Ladeeinheiten (sL),
(v) mit Zwischenprodukten befüllte standardisierte Ladeeinheiten (sL), und
(vi) leere gereinigte standardisierte Ladeeinheiten (sL)
umfasst sind.

Die Untereinheit (2.1) kann beispielsweise als zentrale Einheit ausgestaltet sein, beispielsweise in Form eines Hochregalsystems. Solche Hochregallagersysteme sind in der industriellen Produktion und Logistik bekannt. Sie können insbesondere sehr hoch und damit platzsparend errichtet werden, beispielsweise von über 5 Meter bis hin zu 50 Meter hoch. Es kann dabei hunderte oder sogar tausende Positionen zur Bereithaltung von Komponenten beziehungsweise von leeren Ladeeinheiten (L) und mit Stückgütern (S) befüllten Ladeeinheiten (L) aufweisen. Dabei können die vorgenannten Komponenten auch auf Paletten bereitgehalten werden. In der Regel bestehen solche Hochregallagersysteme aus Stahlkonstruktionen, die innerhalb eines selbsttragenden Gebäudes angeordnet sind oder selbst den tragenden Baukörper innerhalb eines Gebäudes darstellen. Zwischen den einzelnen Regalen beziehungsweise Regaleinheiten befinden sich in der Regel Korridore, über welche insbesondere die weiter unten beschriebenen Mittel (M) eine Zugangsmöglichkeit zu den Bereithaltungspositionen haben.

Die Einheit (2) ist für die Aufnahme und Auslagerung von Stückgütern (S) und Ladeeinheiten (L) geeignet, besitzt also Mittel, die eine entsprechende Aufnahme und Auslagerung ermöglichen.

Unter Stückgütern (S) sind der gängigen Definition zufolge zunächst Güterarten zu verstehen, die in einer Ladeeinheit verpackt insoweit formbeständig sind, dass sie bei Transport oder Lagerungsvorgängen als eine Beförderungseinheit zu behandeln sind. Diese Beförderungseinheiten (als Stückzahlen) sind insbesondere in Abgrenzung zu Massengütern vergleichsweise klein und liegen beispielsweise im Bereich von nur wenigen Kilogramm bis zu maximal einigen wenigen Tonnen. Grund für die geringere Größe der einzelnen Beförderungseinheiten ist insbesondere der vergleichsweise geringe und in großen Produktionsanlagen teils nur unregelmäßige Bedarf.

Als Stückgüter (S) im Zusammenhang mit der vorliegenden Erfindung sind Einsatzstoffe zur Produktion von Formulierungen sowie hergestellte Formulierungen (das heißt Produkte) relevant.

Eine mögliche Gruppe von Einsatzstoffen, im engeren Sinne auch Rohstoffe genannt, sind beispielsweise physikalisch, thermisch und/oder mit aktinischer Strahlung härtbare Harze als Bindemittel, entsprechende Vernetzungsmittel, spezielle organische Lösemittel, Reaktivverdünner, farb- und/oder effektgebende oder transparente Pigmente, Füllstoffe, molekulardispers lösliche Farbstoffe, Nanopartikel, sowie Additive wie Lichtschutzmittel, Antioxidantien, Entlüftungsmittel, Emulgatoren, Slipadditive, Polymerisationsinhibitoren, Polymerisationsinitiatoren, Haftvermittler, Verlaufsmittel, filmbildende Hilfsmittel, Sag-Control-Agents (SCAs), Flammschutzmittel, Korrosionsinhibitoren, Wachse, Sikkative, Biozide und Mattierungsmittel.

Eine ebenfalls mögliche Gruppe von Einsatzstoffen, im engeren Sinne auch Zwischenprodukte genannt, sind solche, die aus mindestens zwei wie oben beschriebenen Rohstoffen hergestellt werden und dann als Einsatzstoffe zur Produktion von Formulierungen eingesetzt werden. Dabei handelt es sich beispielsweise um Pigment- und Füllstoffpasten, die durch Vermischung von (festen) Pigmenten und/oder Füllstoffen mit Harzkomponenten und Lösemitteln wie Wasser oder organischen Lösemitteln hergestellt werden. Möglich sind auch Mischungen von Pigmenten und/oder Füllstoffen, die als solche fest sind. Ein weiteres Beispiel sind pigment- und füllstofffreie Mischlacke, in denen unterschiedliche Rohstoffe wie Harze als Bindemittel, Lösemittel und unterschiedliche Additive miteinander vermischt vorliegen.

Als Stückgüter (S) anfallende Rohstoffe und Zwischenprodukte können auch als Stückgüter (S) für die Produktion von Formulierungen bezeichnet werden.

Die oben genauer beschriebenen Rohstoffe und Zwischenprodukte, das heißt Einsatzstoffe für die Produktion von Formulierungen, sind insbesondere solche, die zur Produktion von Lacken wie beispielsweise Automobillacken verwendet werden. Entsprechend bevorzugte Formulierungen, das heißt Produkte, im Rahmen der vorliegenden Erfindung sind also Lacke wie insbesondere Automobillacke. Genauso umfasst sind aber Formulierungen aus anderen Industriebereichen wie beispielsweise der Lebensmittelindustrie oder der medizinischen Industrie.

Entsprechende Einsatzstoffe und Produkte als Stückgüter können fest oder flüssig (fließfähig) sein. Der Zustand fest oder flüssig (fließfähig) bezieht sich im Rahmen der vorliegenden Erfindung, sofern nicht anders angegeben, jeweils auf eine Temperatur von 20°C, Normaldruck (1013,25 hPa) sowie eine Scherbelastung von 1000 s⁻¹ für eine Minute. Hat eine Komponente bei diesen Bedingungen eine Viskosität von nicht mehr als 10000 mPas (gemessen beispielsweise mit dem Gerät Rheomat RM 180 der Firma Mettler-Toledo), wird sie grundsätzlich als flüssig bezeichnet.

Als Einsatzstoffe sind insbesondere feste Rohstoffe (beispielsweise Pigmente, Füllstoffe) und flüssige Rohstoffe (beispielsweise Harze als Bindemittel, organische Lösemittel) sowie flüssige Zwischenprodukte (beispielsweise Pigmentpasten, Mischlacke) vorstellbar. Als Produkte (Formulierungen) sind im Rahmen der vorliegenden Erfindungen flüssige Produkte bevorzugt, da insbesondere solche durch das modulare Produktionssystem herstellbar sind.

Möglich ist es selbstverständlich auch, beispielsweise Rohstoffe und Zwischenprodukte, die zur Produktion von Formulierungen eingesetzt werden sollen, und bei den oben beschriebenen grundsätzlichen Bedingungen nicht als flüssig zu bezeichnen sind, so vorzubehandeln, dass sie per hier gültiger Definition als flüssiger Einsatzstoff eingesetzt werden können (Viskosität von nicht mehr als 10000 mPas). Eine solche Vorbehandlung erfolgt dann in der weiter unten beschriebenen Vorbehandlungseinheit. Dabei kann beispielsweise ein Einsatzstoff erwärmt werden, um seine Viskosität zu verringern. Genauso kann ein beispielsweise thixotroper Einsatzstoff für eine bestimmte Dauer rotiert, gerührt, getaumelt oder geschüttelt werden, um eine Viskositätsverringerung zu erzielen.

Unter Ladeeinheiten (L) ganz allgemein sind der gängigen Definition zufolge güteraufnehmende Emballagen wie Kisten, Fässer, Container, Säcke und jegliche weiteren vorstellbaren und verfügbaren Behältnisse, beispielsweise die weiter unten genannten standardisierten Ladeeinheiten (sL), zu verstehen.

Die Einheit (2) umfasst eine Aufnahmeuntereinheit (2.2) zur Aufnahme von leeren Ladeeinheiten (L) und mit Stückgütern befüllten Ladeeinheiten (L) sowie eine Auslagerungsuntereinheit (2.3) zur Auslagerung von leeren Ladeeinheiten (L) und mit Stückgütern befüllten Ladeeinheiten (L).

Die Aufnahmeeinheit (2.2) dient zur Aufnahme von leeren Ladeeinheiten (L) und mit Stückgütern (S) befüllten Ladeeinheiten (L).

Bei den leeren Ladeeinheiten (L) kann es sich beispielsweise um Einweglieferemballagen und Mehrweglieferemballagen handeln, die bereitgehalten werden sollen, um sie bei Bedarf manuell oder automatisiert unter Passieren der unten beschriebenen Auslagerungseinheit zur Einheit (1) befördern zu können, um dort produzierte Formulierungen abfüllen zu können. Entsprechende leere Mehrweglieferemballagen werden augenscheinlich bevorzugt vor der Aufnahme in die Einheit (2) gereinigt.

Bei mit Stückgütern (S) befüllten Ladeeinheiten (L) kann es sich demzufolge um Einweglieferemballagen und Mehrweglieferemballagen handeln, die in der Einheit (1) mit dort produzierten Produkten (Formulierungen) befüllt wurden.

Bei mit Stückgütern (S) befüllten Ladeeinheiten (L) kann es sich insbesondere auch um von Rohstofflieferanten in bestimmten Ladeeinheiten angelieferte Rohstoffe handeln (mit Rohstoffen befüllte Originalgebinde). Genauso kann es sich um wie weiter unten genauer beschriebene standardisierte Ladeeinheiten (sL) handeln, die mit Einsatzstoffen, das heißt Rohstoffen oder Zwischenprodukten, befüllt sind.

Bei den leeren Ladeeinheiten (L) kann es sich demzufolge insbesondere auch um entleerte Originalgebinde handeln, die beispielsweise aus dem Modul (3) aufzunehmen sind, um über das Modul (2) aus dem Gesamtsystem (das heißt dem modularen Produktionssystem) ausgeschleust zu werden. Ebenso kann es sich um standardisierte Ladeeinheiten (sL) handeln, die bereitgehalten werden sollen, um mit Rohstoffen und/oder Zwischenprodukten befüllt zu werden. Entsprechende leere Ladeeinheiten (sL) werden augenscheinlich bevorzugt vor der Aufnahme in die Einheit (2) gereinigt.

Demzufolge dient die Aufnahmeeinheit bevorzugt zur Aufnahme von leeren Ladeeinheiten (L) und mit Stückgütern (S) befüllten Ladeeinheiten (L), wobei hierbei zumindest, aber nicht zwingend ausschließlich
(i) leere Einweglieferemballagen und Mehrweglieferemballagen,
(ii) mit Formulierungen befüllte Einweglieferemballagen und Mehrweglieferemballagen,
(iii) mit Rohstoffen befüllte Originalgebinde,
(iv) mit Rohstoffen befüllte standardisierte Ladeeinheiten (sL),
(v) mit Zwischenprodukten befüllte standardisierte Ladeeinheiten (sL),
(vi) leere Originalgebinde, und
(vii) leere gereinigte standardisierte Ladeeinheiten (sL)
umfasst sind.

Die Auslagerungseinheit (2.3) dient zur Auslagerung von leeren Ladeeinheiten (L) und mit Stückgütern (S) befüllten Ladeeinheiten (L).

Bei den leeren Ladeeinheiten (L) kann es sich beispielsweise um bereitgehaltene Einweglieferemballagen und Mehrweglieferemballagen handeln, die bei Bedarf manuell oder automatisiert aus der Einheit (2) zur Einheit (1) zu befördern sind, um dort produzierte Formulierungen abfüllen zu können. Selbiges gilt für leere standardisierte Ladeeinheiten (sL), in die in der Einheit (1) hergestellte Zwischenprodukte abgefüllt werden sollen.

Bei mit Stückgütern (S) befüllten Ladeeinheiten (L) kann es sich demzufolge um Einweglieferemballagen und Mehrweglieferemballagen handeln, die in der Einheit (1) mit dort produzierten Produkten (Formulierungen) befüllt wurden, über die Aufnahmeeinheit in die Einheit (2) aufgenommen wurden und dann beispielsweise zur längerfristigen Lagerung in einem Lager oder zur Auslieferung zu einem Kunden aus der Einheit (2) ausgelagert werden sollen.

Bei mit Stückgütern (S) befüllten Ladeeinheiten (L) kann es sich insbesondere auch um von Rohstofflieferanten in bestimmten Ladeeinheiten angelieferte Rohstoffe handeln (mit Rohstoffen befüllte Originalgebinde). Diese Ladeeinheiten werden bevorzugt ausgelagert, um eine Umfüllung in dem Umfüllmodul (3) zu ermöglichen.

Grundsätzlich möglich, jedoch nicht speziell bevorzugt, ist selbstverständlich auch die Auslagerung von mit Rohstoffen oder Zwischenprodukten befüllten standardisierten Ladeeinheiten (sL). In der Regel werden die in standardisierten Ladeeinheiten (sL) vorliegenden Rohstoffe und Zwischenprodukte über die weiter unten beschriebenen Vorrichtungen (V) in die Einheit (1) überführt und somit verbraucht. Es kann aber beispielsweise aufgrund von kurzfristigen Änderungen im Produktionsablaufplan oder wegen notwendiger Reparaturarbeiten dazu kommen, dass bereits befüllte standardisierte Ladeeinheiten (sL) längerfristig nicht gebraucht werden und daher aus der Einheit (2) ausgelagert werden sollen.

Bei den leeren Ladeeinheiten (L) kann es sich demzufolge insbesondere auch um entleerte Originalgebinde handeln, die aus dem Gesamtsystem ausgeschleust werden sollen. Ebenso kann es sich um zuvor mit Rohstoffen und/oder Zwischenprodukten befüllte standardisierte Ladeeinheiten (sL) handeln, die über die Vorrichtungen (V) entleert wurden, und die dann beispielsweise zur Reinigung aus dem Modul (2) ausgeschleust werden sollen.

Demzufolge dient die Auslagerungseinheit bevorzugt zur Auslagerung von leeren Ladeeinheiten (L) und mit Stückgütern (S) befüllten Ladeeinheiten (L), wobei hierbei zumindest, aber nicht zwingend ausschließlich
(i) leere Einweglieferemballagen und Mehrweglieferemballagen,
(ii) mit Formulierungen befüllte Einweglieferemballagen und Mehrweglieferemballagen,
(iii) mit Rohstoffen befüllte Originalgebinde,
(vi) leere gereinigte standardisierte Ladeeinheiten (sL)
(vii) leere Originalgebinde, und
(viii) leere, verschmutze standardisierte Ladeeinheiten (sL)
umfasst sind.

Aus dem oben beschriebenen folgt, dass ein sich in Produktion befindliches erfindungsgemäßes modulares Produktionssystem bevorzugt die oben genannten Komponenten (i) bis (viii) umfasst.

Wie die oben hinsichtlich ihrer Funktion beschriebenen Einheiten, das heißt die Aufnahmeuntereinheit und die Auslagerungsuntereinheit, technisch auszugestalten sind, ist für Fachmann anhand der gemachten Funktionsangaben problemlos zu ermitteln und individualisiert anpassbar. Beispielsweise können die Einheiten als Tore, Türen, Passagen, Öffnungen oder sonstige Durchlässe ausgestaltet sein, die beispielsweise einen Durchgang oder mehrere Durchgänge von einer zentralen Einheit (2.1) zu anderen Einheiten des Gesamtsystems oder zu Bereichen außerhalb des Gesamtsystems ermöglichen. Dabei können auch ein oder mehrere Durchgänge sowohl Teil der Aufnahmeuntereinheit, als auch der Auslagerungsuntereinheit sein.

In einer bevorzugten Variante umfassen die Aufnahmeuntereinheit und die Auslagerungsuntereinheit in Summe mindestens drei Durchgänge,
wobei mindestens drei Durchgänge Teil sowohl der Aufnahmeuntereinheit, als auch der Auslagerungsuntereinheit sind,
und wobei
mindestens einer dieser Durchgänge die Aufnahme und Auslagerung zwischen der Einheit (2.1) und einer Einheit zur längerfristigen Lagerung sowie zur Aufnahme und Auslagerung von leeren Ladeeinheiten (L) und mit Stückgütern (S) befüllten Ladeeinheiten (L) in das und aus dem Gesamtsystem ermöglicht (nachstehend auch Einheit (4) genannt),
mindestens einer dieser Durchgänge die Aufnahme und Auslagerung zwischen der Einheit (2.1) und der Einheit (1) ermöglicht, und
mindestens einer dieser Durchgänge die Aufnahme und Auslagerung zwischen der Einheit (2.1) und der Einheit (3) ermöglicht.

Wie oben bereits angegeben, ist es bevorzugt, dass das erfindungsgemäße modulare Produktionssystem zudem eine an die Einheit (2) gekoppelte weitere Einheit (3) umfasst, in der eine Umfüllung von insbesondere Rohstoffen aus Originalgebinden in standardisierte Ladeeinheiten (sL) stattfindet. Bei diesen Rohstoffen kann es sich um flüssige und feste Rohstoffe handeln. Die Umfüllung kann beispielsweise über gravitationsgesteuertes, händisch durchgeführtes Gießen und Schütten durchgeführt werden. Möglich ist auch ein pumpengesteuertes Umfüllen von flüssigen Rohstoffen oder durch Roboter gesteuertes Umschütten von festen Rohstoffen). Die so umgefüllten Rohstoffe beziehungsweise die befüllten standardisierten Ladeeinheiten (sL) werden dann wieder in das Modul (2) aufgenommen. Möglich ist auch, dass die Einheit (3) mit einer bevorzugt bestehenden weiteren Einheit des Gesamtsystems gekoppelt ist, nämlich eine Lagerungseinheit (5) für unter anderem feste Rohstoffe. Die festen Rohstoffe sind darin insbesondere in Lagerungsbehältnissen zur längerfristigen Lagerung eingelagert, beispielsweise volumengroße Silos. Vorteil eines solchen Konzepts ist es, dass beispielsweise langfristig lagerbare feste Rohstoffe nicht als Stückgut, sondern in großen Chargen und damit wirtschaftlicher erworben werden können. Das entsprechende Prinzip der Lagerung in großvolumigen Behältnissen wird ebenfalls in Bezug auf bestimmte flüssige Rohstoffe mit erfahrungsgemäß hohem Verbrauch in der Produktion in Ansatz gebracht. Hier erfolgt dann aber bevorzugt nicht die Umfüllung in standardisierten Ladeeinheiten (sL), sondern die flüssigen Rohstoffe werden direkt der Produktion in Einheit (1) zugeführt. Der Vollständigkeit halber sei angemerkt, dass das letztgenannte Prinzip natürlich auch im Zusammenhang mit festen Rohstoffen zumindest grundsätzlich möglich ist.

Aus Obigem folgt zudem, dass das erfindungsgemäße modulare Produktionssystem bevorzugt zudem eine Einheit (4) zur Lagerung beziehungsweise längerfristigen Lagerung von leeren Ladeeinheiten (L) und mit Stückgütern (S) befüllten Ladeeinheiten (L) umfasst. Die Einheit (4) kann beispielsweise zur Lagerung von Einweglieferemballagen und Mehrweglieferemballagen dienen, die mit produzierten Produkten (Formulierungen) befüllt sind und bis zur Auslieferung zu einem Kunden gelagert werden sollen. Genauso können hier Rohstoffe oder Zwischenprodukte in Originalgebinden oder standardisierten Ladeeinheiten gelagert werden.

Die Einheit (4) dient damit zunächst zur im Vergleich zur Bereithaltung in der Einheit (2.1) potentiell längerfristigen Lagerung von unterschiedlichen Stückgütern, das heißt einer potentiellen Lagerung von beispielsweise mehr als 48 Stunden. Natürlich ist auch eine kürze Lagerung möglich, falls beispielsweise ein Versandauftrag für ein Produkt vorliegt. Die Einheit (4) dient damit vor allen Dingen auch zur systemischen und organisatorischen Entlastung der Einheit (2.1), indem in der Einheit eine potentiell längerfristige Lagerung von leeren Ladeeinheiten (L) und mit Stückgütern (S) befüllten Ladeeinheiten (L) stattfindet. Diese leeren Ladeeinheiten (L) und mit Stückgütern (S) befüllten Ladeeinheiten (L) sind dann solche, die grundsätzlich zur Aufnahme in die Einheit (2.1) vorgesehen sind und/oder aus der Einheit (2.1) ausgelagert wurden. Die Einheit (4) dient somit bevorzugt zudem als Schnittstelle zwischen dem Gesamtsystem (dem erfindungsgemäßen Produktionssystem) und der Außenwelt beziehungsweise der Umwelt. Denn über die Einheit (4) kann, letztlich auch als Pufferbereich für die Einheit (2) beziehungsweise Einheit (2.1), eine hinsichtlich Produktionsbedarf und Kundenbedarf zielorientierte Lagerung von leeren Ladeeinheiten (L) und mit Stückgütern (S) befüllten Ladeeinheiten (L) stattfinden. Demnach besitzt die Einheit (4) bevorzugt auch Mittel (Durchgänge) zur Aufnahme und Auslagerung von leeren Ladeeinheiten (L) und mit Stückgütern (S) befüllten Ladeeinheiten (L) in das und aus dem Gesamtsystem. Sie besitzt demzufolge ebenfalls bevorzugt entsprechende Mittel (Durchgänge) zur Aufnahme aus der Einheit (2) beziehungsweise Einheit (2.1) und zur Auslagerung in die Einheit (2) beziehungsweise Einheit (2.1).

Die Einheit (4) kann hierzu in direkter räumlicher Nähe zur Einheit (2) beziehungsweise Einheit (2.1) angeordnet sein. Sie kann jedoch genauso in gewisser räumlicher Entfernung hierzu angeordnet sein, beispielsweise um auf diese Weise bestimmten Sicherheitsaspekten oder individuellen Gegebenheiten des Ortes der Produktionsanlage (beispielsweise Gebäudeanordnung) gerecht zu werden. Ein entsprechender Austausch kann dann beispielsweise über Mittel zum Lasttransport wie Gabelstaplern stattfinden.

Bevorzugt besitzt die Einheit (4) Vorrichtungen zum Etikettieren von Liefereinheiten und/oder Paletten. Auf diese Weise kann eine anlassbezogene Etikettierung von in der Einheit (1) hergestellten und insbesondere in der Einheit (1.4) abgefüllten und gekennzeichneten Materialien erfolgen. Über eine zentrale elektronische Steuerungseinheit können die Kenndaten des Materials abgerufen, in den Vorrichtungen zum Etikettieren verarbeitet und bei der Erzeugung eines Etiketts verwertet werden.

Aus Obigem folgt auch, dass das modulare Produktionssystem bevorzugt zudem eine Einheit (5) zur Lagerung beziehungsweise längerfristigen Lagerung von nicht als Stückgüter gelieferten beziehungsweise als Massengut gelieferten festen und/oder flüssigen Rohstoffen umfasst. Hier werden die Rohstoffe in volumengroßen Lagerungsbehältnissen, beispielsweise Silos oder Tanks, gelagert und können dann über entsprechende Zuleitungssysteme entweder direkt der Produktion in Einheit (1) zugeführt werden und/oder nach entsprechenden Umfüllprozesse, beispielsweise in der Einheit (3), über die Einheit (2) der Produktion zugeführt werden.

Die Einheit (2) umfasst ferner eine Bereitstellungsuntereinheit (2.4) zur Bereitstellung von Stückgütern (S) für die Produktion von Formulierungen, wobei die Einheit hierzu zunächst spezielle Vorrichtungen (V) besitzt.

Die Vorrichtungen (V) besitzen Mittel (V.1) zum automatisierten Andocken von standardisierten Ladeeinheiten (sL).

Unter standardisierten Ladeeinheiten (sL) sind spezielle Ladeeinheiten (Definition Ladeeinheit siehe oben) zu verstehen, die ihrer Funktion entsprechend ausgestaltet und standardisiert sind, das heißt vereinheitlicht sind. Aus dem Merkmal (V.1) ergibt sich inhärent, dass sich die Standardisierung zumindest auf die reversible Verbindung zwischen Ladeeinheit (sL) und der Vorrichtungen (V) über die Mittel (V.1) erstrecken muss (Andocken).

Eine Standardisierung der Ladeeinheiten (sL) ist selbstverständlich auch auf weitere Art und Weise möglich. So können die Ladeeinheiten, unabhängig vom beschriebenen Andocken, hinsichtlich ihres Fassungsvolumens, der Formgeometrie oder des Werkstoffs standardisiert sein. Möglich ist auch, einen bevorzugt an der Oberseite der Ladeeinheit angeordneten Einlass für flüssige oder feste Stoffen als Stückgüter standardisiert vorzusehen.

Grundsätzlich kann genau eine Art von standardisierten Ladeeinheiten (sL) zum Einsatz kommen. Möglich ist auch, dass mehrere Arten von standardisierten Ladeeinheiten (sL) zum Einsatz kommen.

Bevorzugt ist der Einsatz von mindestens zwei Arten von standardisierten Ladeeinheiten (sL), wobei mindestens eine Art die Überführung von flüssigen Einsatzstoffen (sL flüssig) und mindestens eine Art die Überführung von festen Rohstoffen (sL fest) in die Vorrichtungen (V) gewährleisten kann. Denn wie oben beschrieben, werden über die Einheit (1) bevorzugt auch Zwischenprodukte produziert, wobei dies die Bereitstellung von festen Rohstoffen über die Einheit (2) voraussetzt.

Hinsichtlich der Standardisierung des Andockprinzips können im Zusammenhang mit Ladeeinheiten (sL flüssig), aus denen flüssige Einsatzstoffe entnommen werden sollen, ein standardisierter Flüssigkeitsauslauf sowie standardisierte Ansatzstücke zum Andocken an die Mittel (V.1) am Boden der Ladeeinheit vorgesehen werden. Der Flüssigkeitsauslauf ist dabei selbstverständlich reversibel verschließbar beziehungsweise öffenbar. Dies ist beispielsweise über ein elektronisch steuerbares Ventil oder eine mechanisch ankoppelbare Steckverbindung zu realisieren. Nach dem Andocken über die Ansatzstücke ist der Flüssigkeitsauslauf so ausgerichtet, dass ein Stoffstrom aus der Ladeeinheit (sL flüssig) in die Vorrichtung (V) grundsätzlich erfolgen kann. Es besteht also beispielsweise eine physische Verbindung zwischen der Ladeeinheit (sL flüssig) und der Vorrichtung (V), die sich mindestens über die Ansatzstücke der Ladeeinheit (sL flüssig) und entsprechende Andockvorrichtungen an den Mitteln (V.1) ergibt, wobei in diesem Zustand der Flüssigkeitsauslauf beispielsweise in die Vorrichtung (V) hineinragen kann. Dabei ist der Bodenbereich der Ladeeinheit bevorzugt so konstruiert, dass sie auslaufoptimiert und damit vollständig entleerbar ist. Bevorzugt ist auch, dass die Ladeeinheiten (sL flüssig) einen bevorzugt an der Oberseite der Ladeeinheit angeordneten standardisierten Einlass, nämlich ein automatisiert öffenbarer und schließbarer Einlass, beispielsweise ein Spundloch mit Spundlochverschluss, aufweisen, um eine automatische Abfüllung über die unten beschriebene Untereinheit (1.4) zu ermöglichen.

Die Ladeeinheiten (sL flüssig) haben bevorzugt ein Aufnahmevermögen (Fassungsvolumen) von 250 bis 1000 Litern. Die Ladeeinheiten können beispielsweise auch Rührvorrichtungen oder Heizvorrichtungen aufweisen, die beispielsweise elektrisch oder über Druckluft angetrieben werden können. Demzufolge kann ein Einsatzstoff, der beispielsweise zuvor in der unten beschriebenen Vorbehandlungseinheit (2.5) vorbehandelt wurde, auch während der Bereitstellung, das heißt letztlich Zuführung zur Produktion, noch gerührt oder erwärmt werden. Auf diese Weise kann sichergestellt werden, dass der im Rahmen der Vorbehandlung erreichte Zustand des Einsatzstoffs über den gesamten Zeitraum der Bereitstellung erhalten bleibt. Typische Werkstoffe für die Ladeeinheiten (sL flüssig) sind beispielsweise Stähle der Güte 1.4301, 1.4541 oder 1.4571. Die Einlässe zur Befüllung der Ladeeinheiten (sL flüssig) mit flüssigen Stoffen sind bevorzugt an der Oberseite angeordnet. Die Grundfläche der Ladeeinheit beträgt beispielsweise etwa 100 x 120 Zentimeter, um in üblichen Transportsystemen einsetzbar zu sein.

Hinsichtlich der Standardisierung des Andockprinzips können im Zusammenhang mit Ladeeinheiten (sL fest), aus denen feste Einsatzstoffe entnommen werden sollen, ein standardisierter Feststoffauslauf sowie standardisierte Ansatzstücke zum Andocken an die Mittel (V.1) am Boden der Ladeeinheit vorgesehen werden. Der Feststoffauslauf ist dabei selbstverständlich reversibel verschließbar beziehungsweise öffenbar. Dies ist beispielsweise über einen elektronisch steuerbaren Kegel oder eine Dosierschnecke zu realisieren, wobei Kegel oder Schnecke zudem abnehmbare Verschlüsse aufweisen können. Nach dem Andocken über die Ansatzstücke ist der Feststoffauslauf so ausgerichtet, dass ein Stoffstrom aus der Ladeeinheit (sL fest) in die Vorrichtung (V) grundsätzlich erfolgen kann. Es besteht also beispielsweise eine physische Verbindung zwischen der Ladeeinheit (sL fest) und der Vorrichtung (V), die sich mindestens über die Ansatzstücke der Ladeeinheit (sL fest) und entsprechende Andockvorrichtungen an den Mitteln (V.1) ergibt, wobei in diesem Zustand der Feststoffauslauf beispielsweise in die Vorrichtung (V) hineinragen kann.

Die Ladeeinheiten (sL fest) haben bevorzugt ein Aufnahmevermögen (Fassungsvolumen) von 1 bis 2 Kubikmetern. Typische Werkstoffe für die Ladeeinheiten (sL fest) sind beispielsweise Stähle der Güte 1.4301, 1.4541 oder 1.4571 sowie Kunststoffe wie insbesondere leitfähiges Polyethylen. Die Einlässe zur Befüllung der Ladeeinheiten (sL fest) mit festen Stoffen sind bevorzugt an der Oberseite angeordnet.

Wie schon oben angegeben, erstreckt sich die Standardisierung auf die reversible Verbindung zwischen Ladeeinheit (sL) und der Vorrichtungen (V) über die Mittel (V.1).

Hierzu können die Mittel (V.1) Andockvorrichtungen aufweisen, die als Gegenstücke beziehungsweise Verbindungselemente zu den oben genannten Ansatzstücken an den Ladeeinheiten (sL flüssig) und/oder (sL fest) dienen. Wird eine Ladeeinheit (sL) automatisiert an eine Andockstelle (V.1) herangeführt, so wird sie automatisch zentriert und arretiert beziehungsweise angekoppelt. Hierdurch erfolgt zunächst eine für den Stoffstrom geeignete Ausrichtung des Auslaufs der Ladeeinheit (sL). Bevorzugt ist es über diese Ankopplung zudem möglich, über grundsätzlich bekannte Verbindungselemente eine Versorgung der Ladeeinheit (sL) mit allgemeinen Hilfsenergien (Strom, Dampf und/oder Druckluft) zu gewährleisten, um hierdurch eine automatisierte Öffnung der Ladeeinheit (sL) zur Erzeugung eines Stoffstroms zu ermöglich oder auch einen Antrieb von Rührvorrichtungen oder Heizvorrichtungen innerhalb der Ladeeinheit zu gewährleisten.

Die Vorrichtungen (V) umfassen zudem Mittel (V.2) zur automatisierten Entnahme von definierten Mengen von in den standardisierten Ladeeinheiten (sL) vorhandenen Stückgütern. Dient die Entnahme der Herstellung von Formulierungen, so handelt es sich um eine Entnahme von flüssigen und festen Einsatzstoffen (Rohstoffe und/oder Zwischenprodukte) zur Produktion von Formulierungen, insbesondere Lacken. Dient die Entnahme der Herstellung von Zwischenprodukten, wozu das Gesamtsystem bevorzugt geeignet ist, so handelt es sich um eine Entnahme von Einsatzstoffen ausgewählt aus der Gruppe von flüssigen und festen Rohstoffen sowie flüssigen und festen Zwischenprodukten.

Die Mittel (V.2) ermöglichen die Entnahme von definierten Mengen fester oder flüssiger Stoffe, insbesondere in Form eines spezifizierten Massenstroms. Hierzu können die Mittel (V.2) Wägeeinheiten (beispielsweise Wägezellen) und/oder Massendurchflussmesser umfassen, welche den Stoffstrom überwachen und auch regeln und anpassen können.

Im Zusammenhang mit flüssigen Einsatzstoffen ist hierbei die Dimensionierung des jeweiligen Massendurchflussmessers von den Stoffströmen und der Viskosität der Einsatzstoffe abhängig. Die Regelung des Stoffstromes erfolgt beispielsweise über allgemein verfügbare Fördermittel, beispielsweise Pumpen, deren Förderleistung sich in einem weiten Bereich einstellen lässt und/oder ein Regelventil, welches die Förderleistung über die Drosselung des Strömungsquerschnitts beeinflussen kann. Wo genau sich die einzelnen Elemente, beispielsweise die Regelventile, in der Gesamtkonstruktion befinden, ist individuell anpassbar. Sie können sich beispielsweise in direkter Nähe zu den Fördermitteln, aber auch in direkter Nähe zu wie weiter unten genannten Mitteln (X) (insbesondere Sammelleitungen) und damit innerhalb eines Verrohrungsabschnitts (V.3) befinden. Sie können sich sogar innerhalb eines Mittels (X) befinden. In den letztgenannten Fällen sind sie dann zwar in einem Verrohrungsabschnitt (V.3) oder in Sammelleitungen (X) lokalisiert, werden aber aufgrund ihrer Funktion klar den Mitteln (V.2) zugeordnet. Die Dosiergenauigkeit bekannter Systeme beträgt mindestens 1%, bezogen auf den Wert der Zugabe. Ferner ist es möglich, die Dosiergeschwindigkeit auf einen Zielwert zu begrenzen.

Im Zusammenhang mit festen Einsatzstoffen kann die Regelung des Massenstroms über die Vibration eines Kegels, welcher sich im Feststoffcontainer befindet, und/oder den Antrieb einer Schnecke, die Teil eines Feststoffcontainers oder der Vorrichtung (V) sein kann, erfolgen. Auch eine Vibrationseinheit oder Ähnliches (falls zur Unterstützung der Feststofffließeigenschaften notwendig) kann an der Vorrichtung (V) vorhanden sein. Die Dosiergenauigkeit bekannter Systeme beträgt mindestens 2%, bezogen auf den Wert der Zugabe. Ferner ist es möglich, die Dosiergeschwindigkeit beispielsweise auf ein Kilogramm pro Sekunde zu begrenzen. In diesem Fall umfassen die Mittel (V.2) also zunächst Mittel zur Bestimmung einer Entnahmemenge (insbesondere Wägezellen). Zudem umfassen sie Steuerungsmittel für die eigentlichen Mimiken zur Entnahme (das heißt beispielsweise der in den Ladeeinheiten (sL) angeordneten Kegel oder Schnecken). Die Steuerungsmittel wären dann insbesondere über eine elektronische Steuerungseinheit ausgestaltet, die unter Berücksichtigung der durch die Wägezellen ermittelten Informationen die Mimik zur Entnahme ansteuert und den Entnahmeprozess den Vorgaben entsprechend regelt und anpasst.

Die Vorrichtungen (V) umfassen zudem Mittel (V.3), die die definierten Mengen aus (V.2) in die Einheit (1) überführen.

Bei den Mitteln (V.3) kann es sich im Zusammenhang mit flüssigen Stoffen insbesondere um fluidleitende Verrohrungssysteme handeln, die dann schließlich in Mittel (X), insbesondere Sammelleitungen, münden.

Im Zusammenhang mit der Überführung von festen Stoffen handelt es sich bei den Mitteln (V.3) bevorzugt um ein einfaches Fallrohr beziehungsweise einen Teil dieses Fallrohrs, wobei der andere Teil des Fallrohrs dann formal ein wie unten beschriebenes Mittel (X) darstellt.

Wie oben bereits angegeben, ist die Einheit (1) bevorzugt auch zur Produktion von Zwischenprodukten geeignet und entsprechend ausgestaltet, insbesondere hinsichtlich der Verwendung von festen Rohstoffen. Die Bereitstellungsuntereinheit (2.4) dient der Bereitstellung von Stückgütern (S) für die Produktion von Formulierungen (das heißt Rohstoffen und Zwischenprodukten). Da Stückgüter (S) für die Produktion von Formulierungen als Oberbegriff ebenfalls jegliche Stückgüter für die Produktion von Zwischenprodukten umfassen, können über die Einheit (2.4) auch alle notwendigen Einsatzstoffe für die Produktion von Zwischenprodukten bereitgestellt werden.

Die Einheit (2) umfasst bevorzugt zudem eine Vorbehandlungsuntereinheit (2.5) zur Vorbehandlung von Stückgütern (S) für die Produktion von Formulierungen. Vorbehandelt werden können beispielsweise als Stückgüter anfallenden Rohstoffe nach ihrer Überführung in standardisierte Ladeeinheiten (sL). Genauso können Zwischenprodukte, die nach ihrer Herstellung in Einheit (1) direkt in standardisierte Ladeeinheiten (sL) überführt werden und dann in die Einheit (2) aufgenommen werden, vorbehandelt werden. Hierzu werden insbesondere die vorgenannten Ladeeinheiten aus ihren Positionen in der Bereithaltungseinheit (2.1) zum Ort der gewünschten Vorbehandlung transportiert, dort vorbehandelt und dann zu den Vorrichtungen (V) transportiert, um dort für die Produktion bereitgestellt zu werden. Die Vorbehandlung kann beispielsweise das Homogenisieren wie Aufrühren, Schütteln, Rotieren und/oder Taumeln der Stückgüter sowie das Erwärmen der Stückgüter umfassen.

Die Vorbehandlung kann ebenfalls automatisiert, je nach aktueller Rezeptanforderungen der herzustellenden Formulierung oder des herzustellenden Zwischenprodukts, erfolgen. Das heißt, wenn die Produktionsabfolge vorgibt, dass ein einzusetzender Rohstoff oder ein einzusetzendes Zwischenprodukt zu einem gegebenen Zeitpunkt für die Produktion bereitzustellen ist und die Vorbehandlung eines solchen Rohstoffs oder Zwischenprodukts notwendig oder gewünscht ist, wird der Prozess der Vorbehandlung nebst Transport zur Vorbehandlungseinheit und anschließendem Transport zur Bereitstellungseinheit automatisiert so koordiniert, dass eine optimale Bereitstellung des vorbehandelten Rohstoffs oder Zwischenprodukts stattfinden kann.

Eine Vorbehandlung kann beispielsweise gewünscht oder notwendig sein, um bei einem gemäß obiger Definition bei grundsätzlichen Bedingungen nicht flüssigen Einsatzstoff die Viskosität soweit zu erniedrigen, dass ein als flüssiger Einsatzstoff einsetzbarer Stoff entsteht. Genauso kann es aber beispielsweise gewünscht sein, einen bei den oben genannten grundsätzlichen Bedingungen bereits flüssigen Einsatzstoff nochmals niedrig viskoser zu machen und/oder eine Homogenisierung zu erzielen.

Die eigentliche Vorbehandlung kann auf unterschiedliche Weise durchgeführt werden. Beispielsweise können die eigentlichen Ladeeinheiten, in denen sich die Einsatzstoffe befinden, durch entsprechende Vorrichtungen geschüttelt, gerührt oder getaumelt werden. Möglich ist auch, in eine Ladeeinheit eine Rührvorrichtung einzuführen und danach wieder zu entfernen. Die Vorbehandlung kann aber auch über in den Ladeeinheiten integrierte Mittel erfolgen, beispielsweise über Rührvorrichtungen oder Heizvorrichtungen, die innerhalb von Ladeeinheiten (sL flüssig) vorhanden sein können. In diesem Zusammenhang muss die Vorbehandlungseinheit also lediglich einen Stellplatz für die Ladeeinheit und entsprechende Anschlüsse für die in den Ladeeinheiten integrierten Mittel, die zur Vorbehandlung geeignet sind, aufweisen, um diese Mittel beispielsweise elektrisch oder über Druckluft anzutreiben.

Die Einheit (2) umfasst zudem Mittel (M) für den automatisierten Transport von Ladeeinheiten innerhalb von und zwischen Einheiten und Untereinheiten des Produktionssystems. Die Mittel sind also geeignet für den genannten automatisierten Transport. Auf diese Weise können letztlich im Rahmen der vorliegenden Erfindung beschriebene Transport- und Überführungsschritte innerhalb und zwischen Einheiten und Untereinheiten durchgeführt werden. Erfindungsgemäß können die in der Einheit (2.1) bereitgehaltenen, mit Rohstoffen und Zwischenprodukten befüllten standardisierten Ladeeinheiten (sL) automatisiert, je nach aktueller Rezeptanforderungen der herzustellenden Formulierung oder des herzustellenden Zwischenprodukts, zur Einheit (2.4) und damit den Vorrichtungen (V) transportiert werden, um die Zuführung des jeweiligen Rohstoffs oder Zwischenprodukts zum Produktionsprozess zu ermöglichen. Genauso können leere und befüllte Ladeeinheiten zwischen den Einheiten (3) und (2.1) oder zwischen den Einheiten (1) und (2.1), insbesondere den Einheiten (1.4) und (2.1), oder den Einheiten (2) und (4) überführt werden. Weitere mögliche Transport- und Übertragungswege ergeben sich aus der Beschreibung.

Die technische Ausgestaltung solcher Mittel (M) liegt im Wissen des Fachmanns, sei aber trotzdem kurz anhand des automatisierten Transports von Ladeneinheiten zwischen der Untereinheit (2.1) und der Untereinheit (2.4) und damit den Vorrichtungen (V) beschrieben.

Innerhalb von Korridoren in einem Hochregallager (2.1) befinden sich Regalbediengeräte, die automatisiert (gesteuert durch elektronische Steuerungseinheiten) durch die Korridore geführt werden können und dabei Ladeeinheiten in die Bereithaltungspositionen der Einheit (2.1) einlagern oder aus diesen Positionen auslagern können. Möglich ist auch, dass ein Hochregallager einen zentralen Ein- und Auslagerungsbereich aufweist, über den Ladeeinheiten zentral in das Hochregallager eingeführt oder ausgeführt werden sollen. Von dort aus werden dann die Ladeeinheiten bei geplanter Einlagerung von den Regalbediengeräten in die individuellen Bereithaltungspositionen gebracht. Andersherum verläuft es bei der Auslagerung. Die Zuführung oder Abführung von Ladeeinheiten in oder aus dem Hochregallagersystem erfolgt dann über Vorrichtungen, die den schon genannten Regalbediengeräten ähnlich sind oder entsprechen und somit auch den automatisierten Transport zur Untereinheit (2.4) und damit den Vorrichtungen (V) gewährleisten.

Die Regalbediengeräte sind in der Regel schienengeführte, einspurige Fahrzeuge. Sie können auch Weichensysteme und/oder Umsetzer aufweisen, durch die mehrere Korridore oder sogar ein gesamtes Hochregallager bedient werden kann. Die Bewegung der Regalbediengeräte erfolgt jedenfalls in drei Achsen, nämlich entlang des Korridors (Ganglängsrichtung, Fahreinheit), in vertikaler Richtung (Hubeinheit) und in Gangquerrichtung (um Ladeeinheiten in die oder aus den Bereithaltungspositionen zur überführen). Neben oder anstelle solcher einspurigen Fahrzeuge können die Bewegungen in einem Lager beispielsweise auch durch Schlittensysteme erfolgen, welche sich auf Schienen und mit Hilfe von Aufzügen durch ein Lager bewegen, um Transportprozesse auszuführen.

Die oben beschriebene Einheit (2) dient der effektiven Handhabung von Stückgütern und Ladeeinheiten im Rahmen eines industriellen Produktionsprozesses von Formulierungen, wodurch ein extrem effektiver Gesamtprozess zur Produktion gewährleistet wird. Denn die Qualität eines solchen Gesamtprozesses ist neben der eigentlichen Produktion vor allem auch von der zeitlich und räumlich effektiven und aufeinander abgestimmten Organisation von Zuführung, Bereitstellung, Auslagerung und gegebenenfalls Vorbehandlung von Stückgütern und Ladeneinheiten abhängig.

### Einheit (1)

Das erfindungsgemäße modulare Produktionssystem umfasst die bereits oben genannte Einheit (1) zur Produktion und Abfüllung von Formulierungen, bevorzugt Formulierungen (das heißt Produkten) und Zwischenprodukten.

Wie schon oben beschrieben, umfasst die Einheit (1) Mittel, über die die aus Einheit (2) überführten definierten Mengen von Stückgütern für die Produktion von Formulierungen aufgenommen werden können. Da die Überführung über die oben beschriebenen Mittel (V.3) stattfindet, folgt damit, dass die Einheit (1) über diese Mittel mit den Mitteln (V.3) und somit mit der Einheit (2) verbunden ist. Wie genau diese Verbindung im Einzelfall ausgestaltet sein kann, beispielsweise über eine entsprechende Verrohrung, ist individuell anpassbar.

Der besseren Übersichtlichkeit halber werden diese Mittel der Einheit (1) auch als Mittel (X) bezeichnet.

Die Einheit (1) kann letztlich jedwede in diesem Zusammenhang bekannte Produktions- und Abfüllanlage sein.

In der Einheit (1) können also beispielsweise Formulierungen über eine Grundauffertigung hergestellt und abgefüllt werden. Die Nachteile dieser Fertigungsart sind allerdings bekannt. Demnach werden innerhalb der Einheit (1) bevorzugt Formulierungen über die Pasten- und Mischlackfertigung hergestellt und abgefüllt. Bei dieser Form der Fertigung werden bekanntermaßen zunächst Zwischenprodukte wie Pigmentpasten, Tönpasten, funktionale Pasten und Mischlacke hergestellt und dann bedarfsorientiert auf effiziente Art gemischt. Um dann zum Produkt (der Formulierung) zu gelangen, sind dann lediglich noch gegebenenfalls gewisse Nuancier- beziehungsweise Komplettierschritte (beispielsweise Tönschritte oder Viskositätseinstellungen) erforderlich. Vorteil dieser Methode ist, dass die jeweiligen Zwischenprodukte auf jeweils individuell angepasste und optimierte Weise hergestellt werden können. Auch aus diesem Grund ist, wie bereits oben angegeben, die Einheit (1) dazu geeignet, ebenfalls Zwischenprodukte herzustellen.

Die innerhalb der Produktion und Abfüllung einsetzbaren und notwendigen Komponenten sind dem Fachmann grundsätzlich bekannt und bedürfen keiner ausführlichen Erläuterung. Es sei lediglich angemerkt, dass beispielsweise die bekannten Kessel, Reaktoren, Dissolver, Rührwerksmühlen, Rotor-Stator-Aggregate sowie stationären und mobilen Rührwerksbehälter zum Ansetzen, Dispergieren und Komplettieren einsetzbar sind. Auch entsprechende Filterstationen zur Filterung der Produkte sowie entsprechende Mittel zum Abfüllen und gegebenenfalls Kennzeichnen sind bekannt.

Bevorzugte Ausgestaltungen der Einheit (1) werden in der Folge beschrieben.

Die Einheit (1) umfasst bevorzugt eine Untereinheit (1.1) zur Herstellung von Zwischenprodukten unter zumindest anteiligem Einsatz fester Einsatzstoffe, insbesondere fester Rohstoffe (Feststoffe). Entsprechende Zwischenprodukte sind farbige Pigmentpasten, das heißt bunte, unbunte und/oder effektgebende Pigmentpasten (Farb- und/oder Effektpasten) oder auch funktionale Pasten, das heißt Pasten, die beispielsweise funktionale Füllstoffe enthalten und demzufolge ausschließlich oder vorwiegend aufgrund ihrer Funktion in der Lackierung und nicht wegen ihrer Farbgebung eingesetzt werden. Die Definitionen von farbigen Pigmentpasten und funktionalen Pasten sind überschneidend, eine klare Abgrenzung voneinander ist weder möglich, noch gewollt. Entsprechende Zwischenprodukte sind auch reine Pigment- und/oder Füllstoffmischungen.

Entsprechend feste Rohstoffe sind insbesondere die an sich bekannten Pigmente und Füllstoffe.

Augenscheinlich werden bei dieser Herstellung meist auch flüssige Einsatzstoffe, das heißt Rohstoffe oder schon zuvor hergestellte Zwischenprodukte, eingesetzt. Es können auch Einsatzstoffe eingesetzt werden, die so vorbehandelt werden, dass sie als flüssige Einsatzstoffe eingesetzt werden können. Dies geschieht bevorzugt in der Vorbehandlungseinheit (2.5).

Beispielhaft zu nennen sind hier Harze, Lösemitteln und Additive sowie bestimmte Mischlacke.

Die Untereinheit (1.1) umfasst bevorzugt die im Zusammenhang mit der Produktion von Pasten bekannten grundsätzlichen Vorrichtungen, das heißt Vermischungsbehältnisse (Prozessmischer) sowie Mischvorrichtungen, beispielsweise Dissolver wie Standarddissolvern oder Inline-Dissolvern und gegebenenfalls Rührwerksmühlen, die zur Dispergierung und Durchmischung von festen und flüssigen Rohstoffen und flüssigen Zwischenprodukten in den Prozessmischern dienen.

Die Zuführung fester Einsatzstoffe, insbesondere Rohstoffe, zur Untereinheit (1.1) erfolgt dabei bevorzugt jedenfalls, aber nicht zwingend ausschließlich über die Untereinheit (2.4) und damit über die Vorrichtungen (V) sowie die Mittel (X). Selbiges gilt selbstverständlich für flüssige (beziehungsweise nach Vorbehandlung flüssige) Einsatzstoffe.

Demnach kann über die genannten Bestandteile des Gesamtsystems letztlich eine automatisierte Überführung von festen und flüssigen (beziehungsweise nach Vorbehandlung flüssigen) Einsatzstoffen aus mit diesen Einsatzstoffen befüllten standardisierten Ladeeinheiten (sL) innerhalb des Moduls (2) in die Untereinheit (1.1) stattfinden. Entsprechende Vorgaben zur Einstellung des Massenstroms und damit der pro Zeiteinheit oder insgesamt zugeführten Mengen von Einsatzstoffen können elektronisch gesteuert über Rezeptvorgaben erhalten werden. Die standardisierten Ladeeinheiten (sL) wurden dann im Vorfeld insbesondere bevorzugt im Modul (3) mit den Einsatzstoffen befüllt (aus Originalgebinden oder aus volumengroßen Silos oder Tanks) und gegebenenfalls vorbehandelt.

Insbesondere bevorzugt ist hier, dass feste Rohstoffe zunächst innerhalb der Einheit (3) aus Originalgebinden (beispielsweise Säcken) in standardisierte Ladeeinheiten (sL) umgefüllt werden und im Anschluss daran über die Untereinheit (2.4) und damit über die Mittel (V.3) sowie die Mittel (X) in die Untereinheit (1.1) überführt werden. Die Umfüllung der festen Rohstoffe in der Einheit (3) erfolgt dabei bevorzugt unter Einsatz von Robotern, die über Greifarme Stückgüter in Ladeeinheiten (beispielsweise ein pulverförmiges Pigment in einem Sack) aufnehmen können und dann unter Einbezug von Mitteln wie Schneidwerkzeugen die Ladeeinheiten öffnen und das Stückgut dann in die Ladeeinheiten (sL) überführen können.

Eine zusätzliche Überführung von bestimmten Rohstoffen, insbesondere flüssigen Rohstoffen, kann beispielsweise auch direkt aus großvolumigen Behältnissen wie Tanks erfolgen. Diese Überführung kann unter Einbindung von technischen Mitteln zur Überwachung und Regelung des Massenstroms erfolgen, wir sie bereits oben für die Mittel (V.2) beschrieben sind. Auch hier werden Vorgaben zur Einstellung des Massenstroms von Einsatzstoffen bevorzugt elektronisch gesteuert über Rezeptvorgaben erhalten.

In einer bevorzugten Ausführungsform der vorliegenden Erfindung verläuft die Zuführung der Einsatzstoffe wie folgt. Flüssige (beziehungsweise nach Vorbehandlung flüssige) Einsatzstoffe, die als Stückgüter anfallen, werden über die Mittel (V.3) automatisiert, beispielsweise über an sich bekannte fluidleitende Verrohrungssysteme in ein oder mehrere Sammelleitungen überführt. Über eine solche Sammelleitung (entspricht dann einem Mittel (X)) können die Einsatzstoffe dann dem Prozessmischer zugeführt werden. Ebenfalls in die Sammelleitung überführt werden können weitere flüssige (beziehungsweise nach Vorbehandlung flüssige) Einsatzstoffe, die direkt aus großvolumigen Behältnissen wie Tanks entnommen werden. Die Zuführung der festen Einsatzstoffe erfolgt selbstverständlich nicht über die genannte Sammelleitung, sondern sie werden direkt aus den Mitteln (V.3), beispielsweise durch individuelle Zuleitungen/Verrohrungen (entspricht dann einem Mittel (X)), in den Prozessmischer überführt.

Die Zuführung der Einsatzstoffe über die Mittel (X) kann dabei automatisiert und elektronisch gesteuert in beliebiger Reihenfolge (sequentiell, parallel, teilweise parallel) erfolgen, um beispielsweise Einsatzstoffe, die in Reinform beziehungsweise hochkonzentriert miteinander reagieren und/oder unverträglich sind, getrennt voneinander dem Prozessmischer zuzuführen.

Aus obigem folgt, dass die Herstellung in der Untereinheit (1.1) bevorzugt diskontinuierlich erfolgt. Dies bedeutet, dass nach vollständiger Zuführung der Einsatzstoffe in einen entsprechenden Prozessmischer unter Einsatz der schon genannten Durchmischungsvorrichtungen ein Zwischenprodukt batchweise hergestellt wird.

Die dann in Untereinheit (1.1) fertiggestellten Zwischenprodukte enthaltend feste Rohstoffe werden dann über an sich bekannte Abfüllanlagen in hierfür vorgesehene Lagereinheiten überführt. Insbesondere bevorzugt werden die Pasten in standardisierte Ladeeinheiten (sL) abgefüllt und dann über die Untereinheit (2.2) in die Einheit (2) aufgenommen, wo sie dann in der Untereinheit (2.1) für die Produktion von Produkten (Formulierungen) bereitgehalten werden können.

Natürlich kann die aus dem Prozessmischer entnommene Mischung auch vor der Abfüllung über grundsätzlich bekannte Anlagen der Nasszerkleinerung wie beispielsweise Rührwerksmühlen und/oder Inline-Dissolvern behandelt werden.

Bevorzugt umfasst die Einheit (1) des erfindungsgemäßen Produktionssystems demnach eine Untereinheit (1.1) zur Herstellung von Zwischenprodukten unter zumindest anteiligem Einsatz fester Einsatzstoffe, umfassend
a. mindestens einen Prozessmischer,
b. mindestens eine in dem Prozessmischer angeordnete Mischvorrichtungen zur Dispergierung und Durchmischung von festen und flüssigen Einsatzstoffen,
c. Mittel (X1) zur Überführung fester Einsatzstoffe in den Prozessmischer, wobei die Mittel (X1) mit Mitteln (V.3) verbunden sind,
d. Mittel (X2) zur Überführung flüssiger Einsatzstoffe in den Prozessmischer, wobei die Mittel (X2) mit Mitteln (V.3) verbunden sind und wobei die Mittel (X2) mindestens eine Sammelleitung zum sequentiellen, parallelen und/oder teilweise parallelen Überführen von Einsatzstoffen in den Prozessmischer umfassen, sowie
e. bevorzugt Mittel zur Überführung von flüssigen Einsatzstoffen direkt aus großvolumigen Behältnissen wie Tanks in die Sammelleitung.

Die Einheit (1) umfasst bevorzugt eine weitere Untereinheit (1.2) zur Herstellung von Formulierungen und Zwischenprodukten unter Einsatz von flüssigen Einsatzstoffen und/oder Einsatzstoffen, die durch Vorbehandlung als flüssige Einsatzstoffe eingesetzt werden können. Diese Vorbehandlung geschieht bevorzugt in der Vorbehandlungseinheit (2.5). Bevorzugt werden ausschließlich die vorgenannten Einsatzstoffe eingesetzt.

Entsprechende Formulierungen sind Klarlacke und Lacke, die farb- und/oder effektgebende Pigmente und/oder Füllstoffe enthalten (beispielsweise Füller, Basislacke). Entsprechende Zwischenprodukte sind Mischlacke, die aus Rohstoffen wie Harzen, Lösemitteln und Additiven bestehen, jedoch keine Pigmente oder Füllstoffe enthalten. Entsprechende Zwischenprodukte sind auch Pigmentpasten und funktionale Pasten, die aus zuvor in Untereinheit (1.1) hergestellten Zwischenprodukten (wie flüssigen Pigmentpasten) und weiteren Rohstoffen und/oder Zwischenprodukten bestehen.

Die Untereinheit (1.2) umfasst bevorzugt die im Zusammenhang mit der Produktion der genannten Formulierungen und Zwischenprodukte bekannten Vorrichtungen, das heißt Prozessmischer sowie Mischvorrichtungen wie beispielsweise Dissolver zur Durchmischung und Homogenisierung der Einsatzstoffe in den Prozessmischern.

Die Zuführung flüssiger (beziehungsweise nach Vorbehandlung flüssiger) Einsatzstoffe zur Untereinheit (1.2) erfolgt dabei bevorzugt jedenfalls, aber nicht zwingend ausschließlich über die Untereinheit (2.4) und damit über die Vorrichtungen (V) sowie die Mittel (X).

Demnach kann über die genannten Bestandteile des Gesamtsystems letztlich eine automatisierte Überführung von flüssigen (beziehungsweise nach Vorbehandlung flüssigen) Einsatzstoffen aus mit diesen Einsatzstoffen befüllten standardisierten Ladeeinheiten (sL) innerhalb des Moduls (2) in die Untereinheit (1.2) stattfinden. Entsprechende Vorgaben zur Einstellung des Massenstroms und damit der pro Zeiteinheit oder insgesamt zugeführten Mengen von Einsatzstoffen können elektronisch gesteuert über Rezeptvorgaben erhalten werden. Die standardisierten Ladeeinheiten (sL) wurden dann im Vorfeld insbesondere bevorzugt im Modul (3) mit den Einsatzstoffen befüllt (aus Originalgebinden oder aus volumengroßen Tanks) und gegebenenfalls vorbehandelt.

Eine zusätzliche Überführung von bestimmten flüssigen Rohstoffen kann beispielsweise auch direkt aus großvolumigen Behältnissen wie Tanks erfolgen. Diese Überführung kann unter Einbindung von technischen Mitteln zur Überwachung und Regelung des Massenstroms erfolgen, wir sie bereits oben für die Mittel (V.2) beschrieben sind. Auch hier können Vorgaben zur Einstellung des Massenstroms von Einsatzstoffen elektronisch gesteuert über Rezeptvorgaben erhalten werden.

In einer bevorzugten Ausführungsform der vorliegenden Erfindung verläuft die Zuführung der Einsatzstoffe wie folgt. Flüssige (beziehungsweise nach Vorbehandlung flüssige) Einsatzstoffe, die als Stückgüter anfallen, werden über die Mittel (V.3) automatisiert in ein oder mehrere Sammelleitungen überführt. Über eine solche Sammelleitung (entspricht dann einem Mittel (X)) können die Einsatzstoffe dann dem Prozessmischer zugeführt werden. Ebenfalls in die Sammelleitung überführt werden können weitere flüssige (beziehungsweise nach Vorbehandlung flüssige) Einsatzstoffe, die direkt aus großvolumigen Behältnissen wie Tanks entnommen werden.

Die Zuführung der Rohstoffe über die Mittel (X) kann dabei automatisiert und elektronisch gesteuert in beliebiger Reihenfolge (sequentiell, parallel, teilweise parallel) erfolgen, um beispielsweise Einsatzstoffe, die in Reinform beziehungsweise hochkonzentriert miteinander reagieren und/oder unverträglich sind, getrennt voneinander dem Prozessmischer zuzuführen. Möglich ist in diesem Zusammenhang auch, dass der aktuelle Inhalt des Prozessmischers über die Sammelleitung im Kreislauf umgepumpt wird und als Trägerstrom für weitere Einsatzstoffe dient.

Die Herstellung in der Untereinheit (1.2) kann demnach streng diskontinuierlich erfolgten. Nach vollständiger Zuführung der Einsatzstoffe in einen entsprechenden Prozessmischer können unter Einsatz der schon genannten Mischvorrichtungen Formulierungen und Zwischenprodukte batchweise hergestellt werden.

Die so fertiggestellten Formulierungen und Zwischenprodukte können dann über an sich bekannte Abfüllanlagen in hierfür vorgesehene Lagereinheiten überführt werden. Beispielsweise können die Zwischenprodukte in standardisierte Ladeeinheiten (sL) abgefüllt und dann über die Untereinheit (2.2) in die Einheit (2) aufgenommen werden. Dort können Zwischenprodukte in der Untereinheit (2.1) für die Produktion von Produkten (Formulierungen) bereitgehalten werden. In einer bevorzugten Variante werden Zwischenprodukte, insbesondere über fluidleitende Verrohrungen und gegebenenfalls Zwischenschaltung von Fördermitteln wie Pumpen sowie Ventilen, direkt der Untereinheit (1.3) zugeführt. Formulierungen werden bevorzugt in Einweg- oder Mehrweglieferemballagen abgefüllt, dann bevorzugt über die Aufnahmeeinheit (2.2) in die Einheit (2) aufgenommen und aus der Einheit (2) über die Auslagerungseinheit (2.3) zur längerfristigen Lagerung in die Einheit (4) überführt oder direkt an einen Kunden ausgeliefert.

Eine besonders bevorzugte Ausgestaltung der Untereinheit (1.2) wird in der Folge beschrieben.

In dieser Ausführungsform umfasst die Einheit (1.2) nicht nur die schon beschriebenen Prozessmischer als Behältnisse. Vielmehr umfasst die Einheit (1.2) ein oder mehrere Kombinationen von mindestens zwei unterschiedlichen Behältnissen, wobei innerhalb einer solchen Kombination das erste Behältnis ein Prozessmischer ist und das zweite Behältnis einen Puffertank für aus dem Prozessmischer abgelassene flüssige Mischungen darstellt. Prozessmischer und Puffertank sind miteinander verbunden, sodass im Prozessmischer hergestellte Mischungen, beispielsweise Zwischenprodukte oder Formulierungen, gezielt in den Puffertank abgelassen werden können. Technisch ist dies problemlos über eine entsprechende fluidleitende Verrohrung und Zwischenschaltung von Fördermitteln wie Pumpen sowie Ventilen erreichbar. Innerhalb der Verbindungseinheit zwischen Prozessmischer und Puffertank kann auch noch eine weitere Mischvorrichtung, beispielsweise ein Inline-Dissolver, angeordnet sein. Insbesondere kann dieser auch zur Durchmischung eines wie oben beschrieben im Kreislauf zu pumpenden Stoffstroms dienen. Im Prozessmischer und im Puffertank sind dann selbstverständlich typische Mischvorrichtungen angeordnet, über die eine Durchmischung von Einsatzstoffen und damit die Herstellung von flüssigen Zwischenprodukten und Formulierungen gewährleistet wird (Prozessmischer) beziehungsweise die hergestellten Zusammensetzungen zur Verhinderung von Absetzprozessen homogenisiert gehalten werden (Puffertank).

Die Zuführung von Einsatzstoffen zum Prozessmischer erfolgt dann wie oben beschrieben, insbesondere auch unter Einbindung einer entsprechenden Sammelleitung. Die Abfüllung oder direkte Zuführung zur Untereinheit (1.3) erfolgt dann ebenfalls wie oben beschrieben, wobei dann die Formulierungen und Zwischenprodukte nicht aus dem Prozessmischer, sondern aus dem Puffertank abgelassen werden.

Bevorzugt ist, dass innerhalb einer Kombination der Puffertank ein größeres Fassungsvolumen hat, als der Prozessmischer. Besonders bevorzugt hat der Puffertank im Vergleich zum Prozessmischer ein mindestens 2-faches Fassungsvolumen, insbesondere bevorzugt ein mindestens 3-faches Fassungsvolumen. Dabei hat der Prozessmischer beispielsweise ein Fassungsvolumen von 0,1 bis 60 Tonnen, wie beispielsweise 0,5 bis 30 Tonnen oder auch 1 bis 15 Tonnen beziehungsweise 2 bis 5 Tonnen.

Der Vorteil des beschriebenen Anlagenkonzepts von Kombinationen von Prozessmischern und Puffertanks liegt darin, dass auf diese Weise eine besonders effektive, exakte und innerhalb der Prozessführung anpassbare Herstellung von Formulierungen und Zwischenprodukten erfolgen kann.

Ist beispielsweise eine erste Teilcharge eines herzustellenden Materials im Prozessmischer auf Basis von insbesondere elektronisch dokumentierten Rezeptvorgaben hergestellt worden, so kann diese in den Puffertank überführt werden. Abhängig von den Eigenschaften der ersten Teilcharge (Ist-Zustand), den gewünschten Eigenschaften des insgesamt herzustellenden Materials (Soll-Zustand) und der Anzahl an insgesamt hierzustellenden Teilchargen und/oder der Größe (Masse, Volumen) weiterer Teilchargen kann eine gezielte Anpassung der Zuführung von Einsatzstoffen bei der Herstellung einer oder mehrerer weiterer Teilchargen erfolgen. Hierdurch können beispielsweise Eigenschaftsschwankungen der eingesetzten Rohstoffe oder Zwischenprodukte, die bei festgelegten Einsatzmengen zur Herstellung einer ersten Teilcharge mit einem vom Soll-Zustand abweichenden Ist-Zustand führen können, ausgeglichen werden. Weitere Details hierzu werden weiter unten im Rahmen des erfindungsgemäßen Verfahrens beschrieben.

Bevorzugt weißt die Untereinheit (1.2) insbesondere im Zusammenhang mit der genannten Kombination von Prozessmischer und Puffertank, daher eine Messeinrichtung zur Ermittlung von Eigenschaften einer im Prozessmischer hergestellten flüssigen Formulierung oder eines im Prozessmischer hergestellten Zwischenprodukts auf. Die Messeinrichtung kann beispielweise der fluidleitenden Verrohrung (Verbindung) von Prozessmischer und Puffertank zugeordnet sein. Dies bedeutet, über die Verrohrung (beziehungsweise die entsprechenden verbindenden Leitungssysteme) kann hergestelltes flüssiges Material abgezweigt werden und schließlich in eine Messeinrichtung überführt werden. Die Überführung in die Messeinrichtung kann automatisiert oder auch händisch erfolgen. In der Messeinrichtung können dann automatisiert oder händisch veranlasst verschiedene Eigenschaften des flüssigen Materials wie Viskosität, pH-Wert, Leitfähigkeit, Dichte, Temperatur erfasst werden. Möglich ist auch, dass die Messeinrichtung innerhalb des Leitungssystems angeordnet ist und beispielsweise über ein oder mehrere Sensoren zur Erfassung von Eigenschaften des flüssigen Materials automatisiert eine Analyse stattfindet.

Ebenfalls bevorzugt umfasst die Untereinheit (1.2), insbesondere im Zusammenhang mit der genannten Kombination von Prozessmischer und Puffertank sowie der Messeinrichtung, eine mit der Messeinrichtung kommunizierende Auswerteinrichtung zur Bestimmung einer Abweichung von Eigenschaften des im Prozessmischer hergestellten Materials (Ist-Zustand) und den entsprechenden Eigenschaften eines vordefinierten Soll-Zustands. Auch diese Auswertung kann beispielsweise automatisiert erfolgen (Vergleich von Ist-Zustand mit Referenzwerten).

Nicht zuletzt umfasst die Einheit (1.2) bevorzugt, insbesondere im Zusammenhang mit der genannten Kombination von Prozessmischer und Puffertank, der Messeinrichtung sowie der mit der Messeinrichtung kommunizierenden Auswerteinrichtung, eine spezielle Einrichtung zur Anpassung der Zuführung von Einsatzstoffen in den Prozessmischer auf.

Die Einrichtung zur Anpassung der Zuführung von Einsatzstoffen ist dabei, beispielsweise über eine elektronische Informationsübertragungseinheit, mit der Auswerteeinheit verbunden, kann also mit dieser kommunizieren.

Ist nun eine erste hergestellte Teilcharge hinsichtlich relevanter Eigenschaften vermessen worden, diese Eigenschaften mit einem Soll-Zustand verglichen worden und die Teilcharge in den Puffertank überführt worden, so kann die Herstellung einer oder mehrerer weiterer Teilchargen unter Anpassung der Zuführung von Einsatzstoffen in den Prozessmischer durchgeführt werden. Im Ergebnis kann dann ein innerhalb der Spezifikationen liegendes Material erhalten werden, das heißt ein Material, dass - innerhalb akzeptabler Fehlergrenzen - den Soll-Zustand ausweist.

So kann beispielsweise über die mittels der Auswerteeinheit erfassten Abweichungen zwischen Ist-Zustand der ersten Teilcharge und Soll-Zustand eine Anpassung von insgesamt und/oder pro Zeiteinheit zugeführten Mengen von Einsatzstoffen zum Prozessmischer bei einer oder mehreren weiteren Teilchargen erfolgen. Ist im Rahmen der Herstellung der ersten Teilcharge ein zu hoher Anteil eines ersten Einsatzstoffes eingesetzt worden, erfolgt beispielsweise eine entsprechende überproportionale Herabsetzung der zugeführten Menge in einer oder mehreren weiteren Teilchargen, um insgesamt ein innerhalb der Spezifikationen liegendes Material zu erhalten. Entsprechend umgekehrt verläuft es bei zu niedrigen Anteilen von Einsatzstoffen.

Die Anpassung der Zuführung von Einsatzstoffen kann einerseits unter automatisierter Anpassung der entnommenen Mengen von Einsatzstoffen über die Mittel (V.2) und damit auch Anpassung der Überführung aus den Mitteln (V.3) erfolgen. Wie bereits oben beschrieben, kann die grundsätzlich zugeführte Menge von Einsatzstoffen über die Regelung des Massenstroms in den Mitteln (V.2) erfolgen. Genauso kann natürlich der Massenstrom von Einsatzstoffen nachgeregelt und damit angepasst werden. Dies erfolgt dann unter Verwertung der aus der Auswerteeinheit erhaltenen Informationen.

Anderseits müssen bei direkter Zuführung von flüssigen Einsatzstoffen aus beispielsweise Tanks in eine Sammelleitung die zugehörigen Zuleitungsventile ebenfalls hinsichtlich des Massenstroms angepasst werden. Wie schon oben angegeben, kann die grundsätzliche Überführung von Einsatzstoffen unter Einbindung von technischen Mitteln zur Überwachung und Regelung des Massenstroms erfolgen, wir sie bereits oben für die Mittel (V.2) beschrieben sind. Demzufolge kann unter Verwertung der aus der Auswerteeinheit erhaltenen Informationen auch eine Nachregelung und damit Anpassung des Massenstroms erfolgen.

Ein Übertrag von Informationen aus der Auswerteeinheit erfolgt bevorzugt unter Einbindung elektronischer Informationsübertagungseinheiten.

Die Einrichtung zur Anpassung der Zuführung von Einsatzstoffen ist demzufolge bevorzugt als elektronische Steuerungseinheit ausgestaltet, die elektronisch übertragene Eigenschaftsdaten aus der Auswerteeinheit verarbeitet, gegebenenfalls mit weiteren relevanten Eingabeparametern, insbesondere Anzahl und Größe von herzustellenden Teilchargen, korreliert, Justiermengen von Einsatzstoffen ermittelt und dann elektronisch eine Anpassung der Zuführung von Einsatzstoffen veranlasst. Selbstverständlich ist es dazu notwendig, dass die eigentlichen Dosiermimiken, die die technischen Mittel zur Nachregelung und damit Anpassung des Massenstroms aufweisen (Vorrichtungen (V) oder entsprechend gesteuerte Dosiereinheiten bei der Überführung aus beispielsweise Tanks in die Sammelleitung), über die elektronische Steuerungseinheit elektronisch ansteuerbar sind.

Bevorzugt umfasst die Einheit (1) des erfindungsgemäßen Produktionssystems demnach eine Untereinheit (1.2) zur Herstellung von Formulierungen und Zwischenprodukten unter Einsatz von flüssigen Einsatzstoffen und/oder Einsatzstoffen, die durch Vorbehandlung als flüssige Einsatzstoffe eingesetzt werden können, umfassend
a. mindestens eine Kombination aus einem Prozessmischer und einem Puffertank, wobei Prozessmischer und Puffertank Mischvorrichtungen enthalten,
b. mindestens eine fluidleitende Verbindung zwischen Prozessmischer und Puffertank zur Überführung von im Prozessmischer hergestellten Teilchargen von Formulierungen und Zwischenprodukten aus dem Prozessmischer in den Puffertank,
c. Mittel (X3) zur Überführung flüssiger Einsatzstoffe in den Prozessmischer, wobei die Mittel (X3) mit Mitteln (V.3) verbunden sind und wobei die Mittel (X3) mindestens eine Sammelleitung zum sequentiellen, parallelen und/oder teilweise parallelen Überführen von Einsatzstoffen in den Prozessmischer umfassen,
d. bevorzugt Mittel zur Überführung von flüssigen Einsatzstoffen direkt aus großvolumigen Behältnissen wie Tanks in die Sammelleitung,
e. mindestens eine Messeinrichtung zur Ermittlung von Eigenschaften einer im Prozessmischer hergestellten Teilcharge einer flüssigen Formulierung oder eines flüssigen Zwischenprodukts,
f. mindestens eine mit der Messeinrichtung kommunizierende Auswerteinrichtung zur Bestimmung einer Abweichung der Eigenschaften von im Prozessmischer hergestellten Teilchargen von den Eigenschaften eines vordefinierten Soll-Zustands,
g. mindestens eine mit der Auswerteeinheit kommunizierende Einrichtung zur Anpassung der Zuführung von Einsatzstoffen in den Prozessmischer, die dazu eingerichtet ist, unter Berücksichtigung der Abweichungen der Eigenschaften einer hergestellten Teilcharge von den Eigenschaften eines vordefinierten Soll-Zustands sowie der Anzahl und Größe weiterer Teilchargen die zugeführten Mengen von Einsatzstoffen bei der Herstellung weiterer Teilchargen anzupassen, sowie
h. mindestens eine Weiterleitungseinheit zur Weiterleitung von Zwischenprodukten aus dem Puffertank zu mindestens einer weiteren Produktionseinheit des Produktionssystems.

Aus obigem ergibt sich selbstverständlich, dass die Einrichtung zur Anpassung der Zuführung von Einsatzstoffen g. hinsichtlich der eigentlichen Anpassung bevorzugt so eingerichtet ist, dass nach der Herstellung aller Teilchargen (das heißt der Gesamtcharge) die Gesamtcharge den Soll-Zustand aufweist (das heißt innerhalb der Spezifikationen liegt). Dies bedeutet also, dass die entsprechenden Justiermengen von Einsatzstoffen, die zur Einstellung des Soll-Zustands der Gesamtcharge notwendig sind, in der Einrichtung zur Anpassung ermittelt werden, bevor diese dann eine entsprechende Anpassung der Zuführung von Einsatzstoffen veranlasst.

Bevorzugt ist, dass in der Einheit (1.2) klare und weiße Formulierungen und Zwischenprodukte hergestellt werden, bevorzugt ausschließlich klare und weiße Formulierungen und Zwischenprodukte hergestellt werden. Ganz bevorzug werden ausschließlich klare Formulierungen und Zwischenprodukte hergestellt. Eine klare Formulierung ist beispielsweise ein Klarlack, ein klares Zwischenprodukt ist beispielsweise ein Mischlack, der später zur Herstellung von Formulierungen eingesetzt werden soll. Eine weiße Formulierung ist beispielsweise ein unifarbener weißer Basislack. Grund dafür ist, dass insbesondere das beschriebene Anlagenkonzept mit einer Kombination aus Prozessmischer und Puffertank schnell und effizient ohne manuelle Eingriffe nach dem an sich bekannten CIP (Cleaning In Place) Verfahren gereinigt werden können. Zudem ist auf diese Weise eine optimale Nutzung der Einheit im Zusammenhang mit der nachstehenden Untereinheit (1.3) möglich.

Die Einheit (1) umfasst bevorzugt eine weitere Untereinheit (1.3) zur Herstellung von farbigen und/oder effektgebenden Formulierungen unter Einsatz von flüssigen Einsatzstoffen und/oder Einsatzstoffen, die durch Vorbehandlung als flüssige Einsatzstoffe eingesetzt werden können. Diese Vorbehandlung geschieht bevorzugt in der Vorbehandlungseinheit (2.5).

Entsprechende Formulierungen sind insbesondere Lacke, die farb- und/oder effektgebende Pigmente enthalten, beispielsweise unifarbene Basislacke oder effektgebende Basislacke. Auch Lacke wie Füller, die in der Regel Weiß- und/oder Schwarzpigmente enthalten, sind grundsätzlich den farbigen Formulierungen zuzuordnen. Als Einsatzstoffe zur Herstellung dieser Formulierungen kommen insbesondere die in Untereinheit (1.1) hergestellten Zwischenprodukte, beispielsweise Farb- und/oder Effektpasten sowie die in Untereinheit (1.2) hergestellten Mischlacke in Frage. Möglich ist selbstverständlich zudem der Einsatz von flüssigen Rohstoffen.

Die Untereinheit (1.3) kann die schon oben beschriebenen und im Zusammenhang mit der Produktion von Formulierungen bekannten Vorrichtungen umfassen, das heißt Prozessmischer sowie Mischvorrichtungen wie beispielsweise Dissolver zur Durchmischung und Homogenisierung der Einsatzstoffe in den Prozessmischern. Die Zuführung der Einsatzstoffe kann dann grundsätzlich ebenfalls wie oben beschrieben erfolgen, beispielsweise über die Mittel (V.3) und (X) und/oder direkt aus großvolumigen Behältnissen wie Tanks. Die dann fertiggestellten Formulierungen können über bekannte Abfüllanlagen in Einweg- oder Mehrweglieferemballagen abgefüllt werden und dann beispielsweise über die Aufnahmeeinheit (2.2) in die Einheit (2) aufgenommen und aus der Einheit (2) über die Auslagerungseinheit (2.3) zur längerfristigen Lagerung in die Einheit (4) überführt oder direkt an einen Kunden ausgeliefert werden.

Eine besonders bevorzugte Ausgestaltung der Untereinheit (1.3) wird in der Folge beschrieben.

In dieser Ausführungsform umfasst die Einheit (1.3) nicht beziehungsweise nicht nur die schon beschriebenen Prozessmischer inklusive Mischvorrichtungen, um hierdurch letztlich eine diskontinuierliche Herstellung zu gewährleiten. Vielmehr umfasst die Einheit (1.3) die in der Folge beschriebenen Mittel zur kontinuierlichen Herstellung von farbigen und/oder effektgebenden Formulierungen.

Hierzu umfasst die Einheit (1.3) zunächst einen kleinvolumigen Prozessmischer (kP), inklusive Mischvorrichtung. Bei den Mischvorrichtungen handelt es sich hier bevorzugt um Inline-Dissolver, statischer Mischer oder Mischer nach dem Rotor-Stator-Prinzip. Der Terminus kleinvolumig bezieht sich hier auf ein im Verhältnis zu im industriellen Produktionsmaßstab eingesetzten Prozessmischern (meist mehrere Tonnen Fassungsvolumen) signifikant geringeres Fassungsvolumen. Der Prozessmischer hat beispielsweise ein Fassungsvolumen von 0,1 bis 100 Litern, wie beispielsweise 0,5 bis 50 Liter oder auch 1 bis 20 Liter, insbesondere 1 bis 10 Litern, beispielsweise 5 Liter. Der Prozessmischer ist so eingerichtet, dass die Mischvorrichtung zwischen den Einlässen zur Zuführung von Einsatzstoffen und dem mindestens einen Auslass zur Abführung hergestellter Formulierungen angeordnet sind. Die in den Prozessmischer (kP) einfließenden Einsatzstoffe müssen also vor dem Austritt aus dem Prozessmischer die Mischvorrichtung passieren. Durch das durch die geringe Größe des Prozessmischers vorgegebene kleine Mischvolumen und entsprechende hohe Energieeinträge durch die Mischvorrichtung kann eine effiziente Durchmischung der Einsatzstoffe im Rahmen einer kontinuierlichen Herstellung von Formulierungen erfolgen. Unter kontinuierlicher Herstellung ist zu verstehen, dass die Einsatzstoffe zur Herstellung in kontinuierlichen, spezifisch anpassbaren Massenströmen in den Prozessmischer (kP) einströmen und die Einsatzstoffe dann in Form einer Mischung nach Passieren der Mischvorrichtung, das heißt als Formulierung, in einem ebenfalls kontinuierlichen Massenstrom den Prozessmischer über den oder die Auslässe wieder verlassen. Typische Leistungen der Mischvorrichtungen, beispielsweise eines Mischers nach dem Rotor-Stator-Prinzip, liegen im Bereich von 1 bis 250 kW, insbesondere 5 bis 200 kW, bevorzugt 25 bis 150 kW, nochmals bevorzugt 50 bis 125 kW oder auch 85 bis 95 kW, wobei der Fachmann die Leistung problemlos an die sonstigen Kenngrößen des Prozessmischers (kP), beispielsweise das Fassungsvolumen, anpassen kann (geringe Fassungsvolumina korrespondieren mit eher geringeren Leistungen). Die Umdrehungsgeschwindigkeiten können je nach Bauweise variieren, wobei typische Umdrehungsgeschwindigkeiten zwischen 1000-10000 U/min, insbesondere 2000-6000 U/min oder auch 3000-4000U/min liegen können. Bevorzugt ist der Prozessmischer während der Produktion komplett gefüllt und damit frei von Luft, sodass ohne Schaumbildung produziert werden kann.

Die Zufuhr der Einsatzstoffe erfolgt bevorzugt wie folgt. Zunächst werden als Hauptstoffströme, insbesondere über fluidleitende Verrohrungen und gegebenenfalls Zwischenschaltung von Fördermitteln wie Pumpen sowie Ventilen, direkt aus der Untereinheit (1.2) darin hergestellte Zwischenprodukte, insbesondere klare Zwischenprodukte, zugeführt. Vorgaben zur Einstellung des Massenstroms können elektronisch gesteuert über Rezeptvorgaben erhalten werden. Technische Mittel zur Realisierung eines spezifischen Massenstroms sind oben, insbesondere bei den Mitteln (V.2), beschrieben.

Weiterhin werden zur Einbringung von Farb- und/oder Effektpigmenten sowie funktionalen Füllstoffen bevorzugt die in der Einheit (1.1) hergestellten Zwischenprodukte, beispielsweise Farb- und/oder Effektpasten, eingesetzt. Wie oben beschrieben werden diese Zwischenprodukte bevorzugt in standardisierten Lagereinheiten (sL) in der Untereinheit (2.1) bereitgehalten und können dann über die Untereinheit (2.4) bereitgestellt werden. Letztlich werden die Einsatzstoffe über die Mittel (V.3), beispielsweise durch individuelle Zuleitungen/Verrohrungen (entspricht dann einem Mittel (X)), in den Prozessmischer überführt. Entsprechende Vorgaben zur Einstellung des Massenstroms über die Mittel (V.2) und damit der pro Zeiteinheit oder insgesamt zugeführten Mengen von Einsatzstoffen können elektronisch gesteuert über Rezeptvorgaben erhalten werden.

Natürlich ist es auch grundsätzlich vorstellbar, flüssige Zwischenprodukte und Rohstoffe auf andere Weise, beispielsweise direkt aus volumengroßen Behältnissen wie Tanks zuzuführen, Genauso können natürlich auch klare Zwischenprodukte zusätzlich aus standardisierten Lagereinheiten (sL) über die Untereinheit (2.4) automatisiert zugeführt werden.

Der aus dem Prozessmischer (kP) ausgelassene Massenstrom wird dann über fluidleitende Verrohrungen in einen Puffertank, inklusive Mischvorrichtungen zur Verhinderung von Absetzprozessen, überführt. Der Puffertank hat dabei beispielsweise ein Fassungsvolumen von 1 bis 20 Tonnen und wird kontinuierlich durch das aus dem Prozessmischer ausgelassene Material aufgefüllt.

Der Vorteil des beschriebenen Anlagenkonzepts von Kombinationen von Prozessmischern und Puffertanks liegt darin, dass auf diese Weise eine besonders effektive, exakte und innerhalb der Prozessführung anpassbare Herstellung von Formulierungen und Zwischenprodukten unabhängig von der Chargengröße erfolgen kann.

Es wird beispielsweise begonnen, eine Charge eines herzustellenden Materials über den Prozessmischer (kP) auf Basis von insbesondere elektronisch dokumentierten Rezeptvorgaben kontinuierlich zu produzieren. Abhängig von den Eigenschaften des zu Beginn der Chargenproduktion produzierten Materials (Ist-Zustand), den gewünschten Eigenschaften des insgesamt herzustellenden Materials (Soll-Zustand) und der Größe (Masse, Volumen) der Charge kann eine gezielte Anpassung der Zuführung von Einsatzstoffen bei der Herstellung erfolgen. Hierdurch können beispielsweise Eigenschaftsschwankungen der eingesetzten Zwischenprodukte, die bei festgelegten Massenströmen zur Herstellung von Material mit einem vom Soll-Zustand abweichenden Ist-Zustand führen können, ausgeglichen werden. Durch das vergleichsweise große beziehungsweise individuelle auszurichtende Fassungsvolumen des Puffertanks ist zudem gewährleistet, dass die Größe der Charge noch nachträglich angepasst werden kann. Dies bietet sich beispielsweise an, wenn der Ist-Zustand des zu Beginn produzierten Materials besonders signifikant vom Soll-Zustand abweicht. Weitere Details hierzu werden weiter unten im Rahmen des erfindungsgemäßen Verfahrens beschrieben.

Bevorzugt weist die Untereinheit (1.3), insbesondere im Zusammenhang mit der genannten Kombination von Prozessmischer (kP) und Puffertank zur kontinuierlichen Produktion, daher eine Messeinrichtung zur Ermittlung von Eigenschaften einer im Prozessmischer hergestellten flüssigen Formulierung auf. Die Messeinrichtung kann beispielweise der fluidleitenden Verrohrung (Verbindung) von Prozessmischer und Puffertank zugeordnet sein. Dies bedeutet, über die Verrohrung (beziehungsweise die entsprechenden verbindenden Leitungssysteme) kann hergestelltes flüssiges Material abgezweigt werden und schließlich in eine Messeinrichtung überführt werden. Die Überführung in die Messeinrichtung kann automatisiert oder auch händisch erfolgen. In der Messeinrichtung können dann automatisiert oder händisch veranlasst verschiedene Eigenschaften des flüssigen Materials wie Viskosität, pH-Wert, Farbe, Dichte, Leitfähigkeit und Temperatur erfasst werden. Möglich ist auch, dass die Messeinrichtung innerhalb des Leitungssystems angeordnet ist und beispielsweise über ein oder mehrere Sensoren zur Erfassung von Eigenschaften des flüssigen Materials automatisiert eine Analyse stattfindet.

Ebenfalls bevorzugt umfasst die Untereinheit (1.3), insbesondere im Zusammenhang mit der genannten Kombination von Prozessmischer (kP) und Puffertank sowie der Messeinrichtung, eine mit der Messeinrichtung kommunizierende Auswerteinrichtung zur Bestimmung einer Abweichung von Eigenschaften des im Prozessmischer hergestellten Materials (Ist-Zustand) und den entsprechenden Eigenschaften eines vordefinierten Soll-Zustands. Auch diese Auswertung kann beispielsweise automatisiert erfolgen (Vergleich von Ist-Zustand mit Referenzwerten).

Nicht zuletzt umfasst die Einheit (1.3) bevorzugt, insbesondere im Zusammenhang mit der genannten Kombination von Prozessmischer (kP) und Puffertank, der Messeinrichtung sowie der mit der Messeinrichtung kommunizierenden Auswerteinrichtung, eine spezielle Einrichtung zur Anpassung der Zuführung von Einsatzstoffen in den Prozessmischer.

Die Einrichtung zur Anpassung der Zuführung von Einsatzstoffen ist dabei, beispielsweise über eine elektronische Informationsübertragungseinheit, mit der Auswerteeinheit verbunden, kann also mit dieser kommunizieren.

Ist nun beispielsweise zu Beginn der kontinuierlichen Chargenproduktion das hergestellte Material hinsichtlich relevanter Eigenschaften vermessen worden und sind diese Eigenschaften mit einem Soll-Zustand verglichen worden, so kann die weitere kontinuierliche Herstellung unter Anpassung der Zuführung von Einsatzstoffen in den Prozessmischer durchgeführt werden. Dabei ist es von Vorteil, die Eigenschaften des produzierten Materials in spezifischen Zeitabständen oder kontinuierlich regelmäßig zu vermessen und mit dem Soll-Zustand zu vergleichen, um hierdurch eine iterative Anpassung der Zuführung von Einsatzstoffen zu gewährleisten. Im Ergebnis kann dann eine Charge von innerhalb der Spezifikationen liegendem Material erhalten werden, das heißt Material, das - innerhalb akzeptabler Fehlergrenzen - den Soll-Zustand ausweist.

Dabei kann beispielsweise eine überproportionale Herabsetzung oder Heraufsetzung des Massenstroms von einem oder mehreren Einsatzstoffen erfolgen, um letztlich ein innerhalb der Spezifikationen liegendes Material zu erhalten. Durch den aber im Vergleich zum Puffertank sehr kleinen Prozessmischer (kP) können trotz hoher Durchflussraten in der Regel die Materialflusseinstellungen zum Erhalt des Sollzustands erreicht werden, bevor 5 Massenprozent des Chargenvolumens produziert worden sind. Wird dann unter Wahrung der Einstellungen zum Erhalt des Sollzustands weiterproduziert und in den Puffertank abgelassen, kann auch ohne überproportionale Anpassung der Massenströme eine Charge von innerhalb der Spezifikationen liegendem Material erhalten werden, in der das zu Beginn produzierte Material verschnitten ist.

Die Anpassung der Massenströme und die Ausgestaltung der Einrichtung zur Anpassung der Zuführung von Einsatzstoffen als elektronische Steuerungseinheit ist auf die bei Untereinheit (1.2) beschriebene Art und Weise möglich.

Die dann fertiggestellten Formulierungen können dann wie oben beschrieben aus dem Puffertank in Einweg- oder Mehrweglieferemballagen abgefüllt werden und dann beispielsweise über die Aufnahmeeinheit (2.2) in die Einheit (2) aufgenommen und aus der Einheit (2) über die Auslagerungseinheit (2.3) zur längerfristigen Lagerung in die Einheit (4) überführt oder direkt an einen Kunden ausgeliefert werden.

Bevorzugt umfasst die Einheit (1) des erfindungsgemäßen Produktionssystems demnach eine Untereinheit (1.3) zur kontinuierlichen Herstellung von farbigen und/oder effektgebenden Formulierungen unter Einsatz von flüssigen Einsatzstoffen und/oder Einsatzstoffen, die durch Vorbehandlung als flüssige Einsatzstoffe eingesetzt werden können, umfassend
a. mindestens eine Kombination aus einem kleinvolumigen Prozessmischer (kP) und einem Puffertank, wobei Prozessmischer und Puffertank Mischvorrichtungen enthalten,
b. mindestens eine fluidleitende Verbindung zwischen Prozessmischer und Puffertank zur Überführung einer im Prozessmischer kontinuierlich hergestellten Formulierung aus dem Prozessmischer in den Puffertank,
c. Mittel (X4) zur Überführung flüssiger Zwischenprodukte enthaltend farb- und/oder effektgebende Pigmente und/oder Füllstoffe in den Prozessmischer (kP), wobei die Mittel (X4) mit Mitteln (V.3) verbunden sind,
d. mindestens eine fluidleitende Verbindung zwischen dem Prozessmischer (kP) und der Untereinheit (1.2) zur Überführung von in der Einheit (1.2) hergestellten flüssigen Zwischenprodukten,
e. mindestens eine Messeinrichtung zur Ermittlung von Eigenschaften einer im Prozessmischer (kP) kontinuierlich hergestellten flüssigen Formulierung,
f. mindestens eine mit der Messeinrichtung kommunizierende Auswerteinrichtung zur Bestimmung einer Abweichung der Eigenschaften von einer im Prozessmischer (kP) kontinuierlich hergestellten Formulierung von den Eigenschaften eines vordefinierten Soll-Zustands, sowie
g. mindestens eine mit der Auswerteeinheit kommunizierende Einrichtung zur Anpassung der Zuführung von Einsatzstoffen in den Prozessmischer (kP), die dazu eingerichtet ist, unter Berücksichtigung der Abweichungen der Eigenschaften einer kontinuierlich hergestellten Teilmenge einer Formulierung von den Eigenschaften eines vordefinierten Soll-Zustands die zugeführten Mengen von Einsatzstoffen bei der kontinuierlichen Herstellung weiterer Teilmengen anzupassen.

Nicht zuletzt umfasst das erfindungsgemäße Produktionssystem in der Einheit (1) bevorzugt zudem eine Untereinheit (1.4) zur automatisierten Abfüllung und Kennzeichnung von hergestellten Zwischenprodukten und Formulierungen, insbesondere der in den Untereinheiten (1.1), (1.2) und (1.3) hergestellten Zwischenprodukte und Formulierungen.

So kann die bereits oben im Rahmen der Beschreibung der vorgenannten Untereinheiten erwähnte Abfüllung in der Untereinheit (1.4) erfolgen. Hierzu werden in der Einheit (1.4) Lagereinheiten vorgehalten, die dann bei Bedarf automatisiert befüllt werden. Bei den Liefereinheiten kann es sich insbesondere um zu befüllende Einweglieferemballagen und Mehrweglieferemballagen sowie standardisierte Ladeeinheiten (sL) handeln.

Die Untereinheit (1.4) weist damit die grundsätzlich für Abfüllanlagen typischen Einrichtungen auf, die bekannt sind und auf deren detaillierte Erläuterung demzufolge verzichtet werden kann. Es sei lediglich darauf hingewiesen, dass die Einheit selbstverständlich Mittel zum Auslassen hergestellter Materialien (beispielsweise Formulierungen) (Abfüllköpfe mit Abfülllanzen) und Positionen zur Bereitstellung von Lieferemballagen zur Befüllung mit hergestellten Materialien umfasst.

Eine automatisierte Abfüllung kann beispielsweise dann sehr effizient erfolgen, wenn die zu befüllenden Liefereinheiten automatisiert öffenbare und schließbare Einlässe, beispielsweise Spundlöcher mit entsprechenden Spundlochverschlüssen, aufweisen.

Die Einheit (1.4) weist damit bevorzugt Mittel zum automatisierten Öffnen und Schließen von Einlässen von Liefereinheiten auf. Es kann sich dabei um an sich bekannte Werkzeuge handeln, die das Spundloch durch Abnahme des Spundlochverschlusses öffnen und den Verschluss tragen können. Vorhanden sind zudem Mittel beziehungsweise Werkzeuge, die dazu eingerichtet sind, den Abfüllkopf mit der Abfülllanze zu tragen und in den Einlass der Lieferemballage einzuführen. Die Abfüllung erfolgt durch Übertrag des hergestellten Materials aus der Produktionseinheit, beispielsweise einem Prozessmischer oder Puffertank, über die Mittel zum Auslassen (Abfüllkopf mit Abfülllanze) in die Lieferemballage. Die Einstellung des Massenstroms kann über schon oben genannte Fördermittel wie Pumpen und elektronisch ansteuerbare Ventile erfolgen. Die abzufüllende Menge ist beispielsweise über Waagen und/oder Massendurchflussmesser zu regulieren. Nach der Abfüllung wird das Spundloch wieder über das Mittel zum automatisierten Öffnen und Schließen von Einlässen, das heißt dem Werkzeug, das den Verschluss tragen kann, verschlossen.

Die zu befüllenden Lieferemballagen werden bevorzugt elektronisch und auftragsgesteuert aus dem Modul (2) über die Auslagerungsuntereinheit (2.3) in die Untereinheit (1.4) und darin zu den Positionen zur Bereitstellung von Lieferemballagen zur Befüllung mit hergestellten Materialien transportiert. Nach der Befüllung werden die Lieferemballagen beispielsweise über die Aufnahmeeinheit (2.2) in die Einheit (2) aufgenommen und aus der Einheit (2) über die Auslagerungseinheit (2.3) zur längerfristigen Lagerung in die Einheit (4) überführt oder direkt an einen Kunden ausgeliefert.

Dieses Prozedere kann beispielsweise auch mit auf Paletten angeordneten Lieferemballagen erfolgen, sodass auch mehrere Lieferemballagen gleichzeitig oder hintereinander befüllt und dann gelichzeitig wieder aus der Einheit (1.4) ausgeschleust werden können.

Die dann fertiggestellten Formulierungen können dann wie oben beschrieben aus dem Puffertank in Einweg- oder Mehrweglieferemballagen abgefüllt werden und dann beispielsweise über die Aufnahmeeinheit (2.2) in die Einheit (2) aufgenommen und aus der Einheit (2) über die Auslagerungseinheit (2.3) zur längerfristigen Lagerung in die Einheit (4) überführt oder direkt an einen Kunden ausgeliefert werden.

In der Untereinheit (1.4) werden die hergestellten Zwischenprodukte und Formulierungen auch gekennzeichnet. Diese Kennzeichnung ist auf unterschiedliche Weise möglich. So können Vorrichtungen zum Etikettieren der Liefereinheiten und/oder Paletten vorhanden sein, an die über eine zentrale elektronische Steuerungseinheit des Gesamtsystems Kenn- beziehungsweise Identifizierungsdaten des abzufüllenden Materials übermittelt werden. Diese Daten, beispielsweise Art des Materials, Auftragsnummer, Gebindetyp und/oder Anzahl der Gebinde auf einer Palette, werden in den Vorrichtungen zum Etikettieren verarbeitet und bei der Erzeugung eines Etiketts für die zur Abfüllung eingesetzten Liefereinheiten und/oder Paletten verwertet. Statt einer Etikettierung sind auch andere Arten der Kennzeichnung, beispielsweise das Aufdrucken eines Barcodes, möglich. Eine tatsächliche Etikettierung kann dann später, beispielweise innerhalb der Einheit (4), erfolgen. Diese Etikettierung kann dann auch anlassbezogen, das heißt erst bei der Auslieferung an einen Kunden, erfolgen. Dies hat den Vorteil, dass beispielsweise transport- und/oder kundenspezifische Besonderheiten bei der Erstellung des Etiketts erfolgen können, die zum Zeitpunkt der Herstellung noch nicht bekannt waren.

Ein möglicher und bevorzugter Weg der Kennzeichnung umfasst die individuelle Kennung von Liefereinheiten und Paletten, insbesondere Paletten. Die innerhalb des Gesamtsystems eingesetzten Paletten weisen in dieser Ausführungsform also eine jeweils individuelle Kennung, beispielsweise einen Barcode oder einen RFID Transponder auf. Über eine zentrale elektronische Steuerungseinheit des Gesamtsystems wird eine eindeutige Zuordnung von abgefülltem Material und der Palette (und den darauf angeordneten Liefereinheiten) erreicht. Die entsprechenden Daten werden elektronisch gespeichert. Eine tatsächliche Etikettierung kann dann später, insbesondere anlassbezogen in der Einheit (4) erfolgen.

### Verfahren

Die vorliegende Erfindung betrifft auch ein Verfahren zur Herstellung von Formulierungen und Zwischenprodukten unter Einsatz des erfindungsgemäßen modularen Produktionssystems.

Zentrale Merkmale und Ausführungen des Verfahrens sind bereits oben bei der Beschreibung des Produktionssystems beschrieben. Zudem gilt, dass die oben beschriebenen besonderen Ausführungen und Merkmale hinsichtlich des Produktionssystems auch im Zusammenhang mit dem erfindungsgemäßen Verfahren gelten.

Daraus ergibt sich, dass das erfindungsgemäße Verfahren bevorzugt zumindest die folgenden Schritte umfasst:
(1) Überführen von mit Einsatzstoffen zur Produktion von Formulierungen und/oder Zwischenprodukten befüllten standardisierten Ladeneinheiten (sL) aus der Bereithaltungsuntereinheit (2.1) in die Bereitstellungsuntereinheit (2.4) unter Einsatz der Mittel (M)
(2) Andocken der standardisierten Ladeneinheiten (sL) aus (1) an die Vorrichtungen (V), Entnahme definierter Mengen von in den standardisierten Ladeneinheiten (sL) vorhandenen Einsatzstoffen sowie Überführung dieser Mengen in die Einheit (1)
(3) Produktion und Abfüllung von Formulierungen und/oder Zwischenprodukten in der Einheit (1) unter zumindest anteiliger Verwendung der Einsatzstoffe aus (2).

Weitere bevorzugte Verfahrensschritte ergeben sich unmittelbar aus den oben beschriebenen Merkmalen des Produktionssystems.

So ist es beispielsweise nochmals bevorzugt, dass das Verfahren folgende Schritte (1) umfasst:
(1a) Überführen von mit Einsatzstoffen zur Produktion von Formulierungen und/oder Zwischenprodukten befüllten standardisierten Ladeneinheiten (sL) aus der Bereithaltungsuntereinheit (2.1) in die Bereitstellungsuntereinheit (2.4) unter Einsatz der Mittel (M)
(1b) Überführen von mit Einsatzstoffen zur Produktion von Formulierungen und/oder Zwischenprodukten befüllten standardisierten Ladeneinheiten (sL) aus der Bereithaltungsuntereinheit (2.1) in die Vorbehandlungsuntereinheit (2.5) unter Einsatz der Mittel (M), Vorbehandlung der Einsatzstoffe und Überführen der mit vorbehandelten Einsatzstoffen befüllten standardisierten Ladeneinheiten (sL) aus Vorbehandlungsuntereinheit (2.5) in die Bereitstellungsuntereinheit (2.4) unter Einsatz der Mittel (M).

Ebenfalls bevorzugt umfasst das erfindungsgemäße Verfahren folgende Schritte und/oder Abläufe.

Unter Einsatz der Untereinheit (1.1) erfolgt bevorzugt folgender Ablauf.

Chargenbasierte Fertigung von Zwischenprodukten unter anteiligem Einsatz fester Einsatzstoffe, insbesondere Pigmente und Füllstoffe, umfassend
- Überführung von festen und flüssigen Einsatzstoffen in einen Prozessmischer, in dem eine Mischvorrichtungen zur Dispergierung und Durchmischung von festen und flüssigen Einsatzstoffen vorhanden ist, wobei sowohl feste als auch flüssige Einsatzstoffe zumindest anteilig aus standardisierten Ladeeinheiten (sL) durch Entnahme definierter Mengen unter Einsatz von Vorrichtungen (V) überführt werden,
- Herstellung von Zwischenprodukten durch Vermischen der Einsatzstoffe im Prozessmischer,
- Abfüllung der Zwischenprodukte in standardisierte Ladeeinheiten (sL) und Überführung der befüllten Ladeeinheiten in die Einheit (2).

Unter Einsatz der Untereinheit (1.2) erfolgt bevorzugt folgender Ablauf.

Fertigung von Formulierungen und Zwischenprodukten unter Einsatz von flüssigen Einsatzstoffen und/oder Einsatzstoffen, die durch Vorbehandlung als flüssige Einsatzstoffe eingesetzt werden können, wobei die Fertigung einer Formulierung oder eines Zwischenprodukts die folgenden Schritte umfasst:
- Überführung von Einsatzstoffen in einen Prozessmischer, in dem eine Mischvorrichtungen zur Dispergierung und Durchmischung von flüssigen Einsatzstoffen vorhanden ist, wobei die Einsatzstoffe zumindest anteilig aus standardisierten Ladeeinheiten (sL) durch Entnahme definierter Mengen unter Einsatz von Vorrichtungen (V) überführt werden,
- Herstellung einer ersten Teilcharge eines Zwischenprodukts oder einer Formulierung durch Vermischen der Einsatzstoffe im Prozessmischer,
- Überführung der Teilcharge in einen Puffertank mit Mischvorrichtung über eine fluidleitende Verbindung zwischen Prozessmischer und Puffertank,
- Ermittlung von Eigenschaften der Teilcharge vor, während oder nach der Überführung in den Puffertank durch eine Messeinrichtung,
- Bestimmung einer Abweichung von Eigenschaften der Teilcharge von den Eigenschaften eines vordefinierten Soll-Zustands durch eine Auswerteeinheit,
- Ermittlung der Justiermengen von Einsatzstoffen, die unter Berücksichtigung der Abweichungen der Eigenschaften der ersten Teilcharge vom Soll-Zustand sowie der Anzahl und Größe weiterer Teilchargen zur Einstellung des Soll-Zustands der Gesamtcharge notwendig sind,
- Herstellung mindestens einer weiteren Teilcharge im Prozessmischer, wobei die ermittelten Justiermengen bei mindestens einer der weiteren Teilchargen durch Anpassung der Zuführung von Einsatzstoffen in den Prozessmischer berücksichtigt werden,
- Überführung der mindestens einen weiteren Teilcharge in den Puffertank zur Vereinigung mit der ersten Teilcharge und Vermischung aller Teilchargen zur Herstellung der Gesamtcharge.

Die Justiermengen im oben genannten Sinne können augenscheinlich sowohl positiv, als auch negativ sein. Eine positive Justiermenge bedeutet, dass insgesamt ein höherer Anteil des jeweiligen Einsatzstoffes eingesetzt werden muss, um den Soll-Zustand zu erreichen. Dies kann durch einen höheren Anteil des Einsatzstoffes bei der Produktion mindestens einer weiteren Teilcharge und/oder durch geringere Anteile anderer Einsatzstoffe bei der Produktion mindestens einer weiteren Teilcharge erfolgen. Entsprechend umgekehrt verhält es sich mit negativen Justiermengen.

Es hat sich gezeigt, dass im Zusammenhang mit nicht automatisierter Messung von Eigenschaften in der Messeinrichtung vorteilhaft wie folgt vorgegangen werden kann. Es werden insgesamt drei Teilchargen hergestellt, wobei die erste Teilcharge und die zweite Teilcharge auf dieselbe Weise produziert werden. Während der Produktion der zweiten Teilcharge werden Eigenschaften der ersten Teilcharge gemessen und hinsichtlich Abweichungen vom Soll-Zustand ausgewertet. Zudem werden die Justiermengen ermittelt. Die Produktion der dritten Teilcharge erfolgt dann unter Berücksichtigung der Justiermengen. Auf diese Weise verbleibt ausreichend Zeit, in der das Material der ersten Teilcharge vermessen werden kann.

Unter Einsatz der Untereinheit (1.3) erfolgt bevorzugt folgender Ablauf.

Kontinuierliche Fertigung von farbigen und/oder effektgebenden Formulierungen unter Einsatz von flüssigen Einsatzstoffen und/oder Einsatzstoffen, die durch Vorbehandlung als flüssige Einsatzstoffe eingesetzt werden können, wobei die Fertigung einer Formulierung die folgenden Schritte umfasst:
- Kontinuierliche Überführung von Einsatzstoffen in einen kleinvolumigen Prozessmischer (kP), in dem eine Mischvorrichtungen zur Durchmischung der Einsatzstoffe vorhanden ist, wobei die Einsatzstoffe zumindest anteilig aus standardisierten Ladeeinheiten (sL) durch Entnahme definierter Mengen unter Einsatz von Vorrichtungen (V) überführt werden,
- Kontinuierliche Herstellung einer Formulierung durch Vermischen der Einsatzstoffe im Prozessmischer (kP) und Überführung der Formulierung in einen Puffertank mit Mischvorrichtung über eine fluidleitende Verbindung zwischen Prozessmischer (kP) und Puffertank,
- Ermittlung von Eigenschaften der kontinuierlich hergestellten Formulierung durch eine Messeinrichtung,
- Bestimmung einer Abweichung von Eigenschaften der kontinuierlich hergestellten Formulierung von den Eigenschaften eines vordefinierten Soll-Zustands durch eine Auswerteeinheit,
- Ermittlung der Anpassungsmengen von Einsatzstoffen, die unter Berücksichtigung der Abweichungen der Eigenschaften der kontinuierlich hergestellten Formulierung vom Soll-Zustand sowie gegebenenfalls der Menge an insgesamt herzustellender Formulierungsmenge zur Einstellung des Soll-Zustands der Gesamtmenge notwendig sind,
- Kontinuierliche Herstellung weiterer Mengen der Formulierung im Prozessmischer, wobei die ermittelten Anpassungsmengen durch Anpassung der Zuführung von Einsatzstoffen in den Prozessmischer berücksichtigt werden.

Die Anpassungsmengen im oben genannten Sinne können augenscheinlich sowohl positiv, als auch negativ sein. Eine positive Anpassungsmenge bedeutet, dass insgesamt ein höherer Anteil des jeweiligen Einsatzstoffes eingesetzt werden muss, um bei der insgesamt herzustellenden Formulierungsmenge den Soll-Zustand zu erreichen. Dies kann durch einen höheren Anteil des Einsatzstoffes bei der kontinuierlichen Weiterproduktion und/oder durch geringere Anteile anderer Einsatzstoffe bei der kontinuierlichen Weiterproduktion erfolgen. Entsprechend umgekehrt verhält es sich mit negativen Justiermengen.

Durch das neue modulare Produktionssystem und die Einheit (2) sowie das erfindungsgemäße Verfahren gelingt es, eine effektive und teilweise oder vollständig automatisierte Organisation der Handhabung von als Stückgüter anfallenden Einsatzstoffen und Produkten zu gewährleisten. Innerhalb eines komplexen Produktionssystems wird die Zuführung, Bereithaltung und Bereitstellung, Auslagerung und gegebenenfalls Vorbehandlung von Stückgütern und Ladeneinheiten zur richtigen Zeit am richtigen Ort gewährleistet. Im Rahmen spezieller Ausgestaltungen der eigentlichen Produktionseinheit (1) kommen die Vorteile der Einheit (2) nochmals besser zum Tragen, sodass ein in Summe enorm effektiver Produktionsprozess - ausgehend von der Zuführung der Einsatzstoffe bis zur Auslagerung von Produkten - ermöglicht wird.

Ein weiterer nennenswerter Vorteil des modularen Produktionssystems liegt in seiner Fähigkeit zur sukzessiven Erweiterung beziehungsweise Expansion. Ein als zunächst lokales und vergleichsweise kleiner Produktionsstandort aufgebautes System kann durch Hinzufügen weiterer Bereiche (Zusatzbereiche), die den einzelnen Einheiten und Untereinheiten zuzuordnen sind, erweitert werden. Komplette Erweiterungsbereiche können auf unterschiedliche Weise, je nach den gegebenen Anforderungen, ausgestaltet sein. So kann beispielsweise ein erster Erweiterungsbereich in Bezug auf die Untereinheit (1) lediglich Zusatzbereiche ausweisen, die den Untereinheiten (1.1) und (1.4) zuzuordnen sind, da beispielsweise der Bedarf an Pigmentpasten besonders hoch ist. Ein zweiter Erweiterungsbereich kann beispielsweise in Bezug auf die Untereinheit (1) lediglich Zusatzbereiche ausweisen, die den Untereinheiten (1.2) und (1.4) zuzuordnen sind, da beispielsweise der Bedarf an klaren Zwischenprodukten besonders hoch geworden ist. Sollten diese Zwischenprodukte dann direkt an die Untereinheit (1.3) weitergeleitet werden, kann in diesem Erweiterungsbereich auch auf einen dezidierten Zusatzbereich, der der Einheit (4) zuzuordnen ist, verzichtet werden.

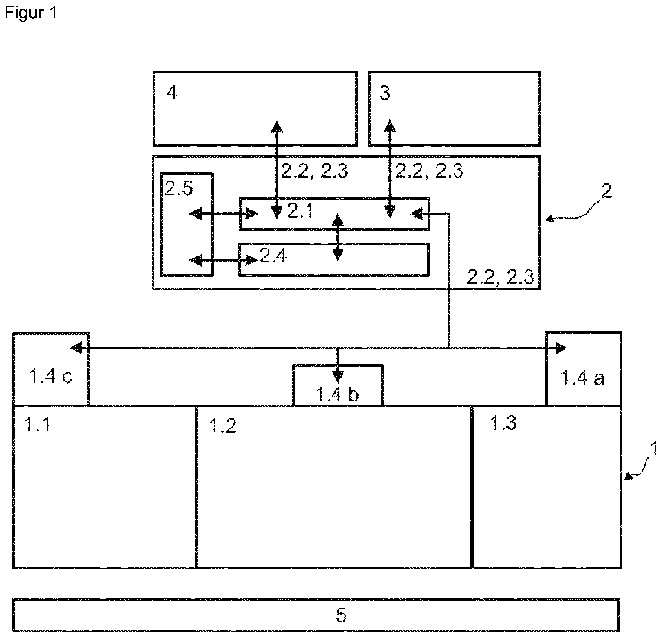

Die vorliegende Erfindung, insbesondere das erfindungsgemäße Produktionssystem, soll zudem unter Bezugnahme auf die beigefügten Figuren 1 bis 3 näher erläutert werden.

### Figur 1: Erfindungsgemäßes Produktionssystem und Bewegung von Ladeeinheiten

Figur 1 zeigt schematisch ein erfindungsgemäßes Produktionssystem umfassend die erfindungswesentlichen Einheiten (1) und (2) (inklusive der bevorzugt existenten Untereinheit (2.5)) sowie die optionalen Einheiten (3), (4) und (5). Der besseren Übersichtlichkeit halber wurde die Untereinheit (1.4) in drei Bereichen dargestellt (im Einklang stehend mit der oben angeführten Definition von Modul oder Einheit oder Untereinheit, die an die Eigenschaften und die Funktion der Einheiten und nicht an die räumliche Anordnung anknüpft). Die Figur zeigt zudem anhand von Pfeilen dargestellte typische und bevorzugt stattfindende Bewegungsabläufe von Ladeeinheiten innerhalb des Systems.

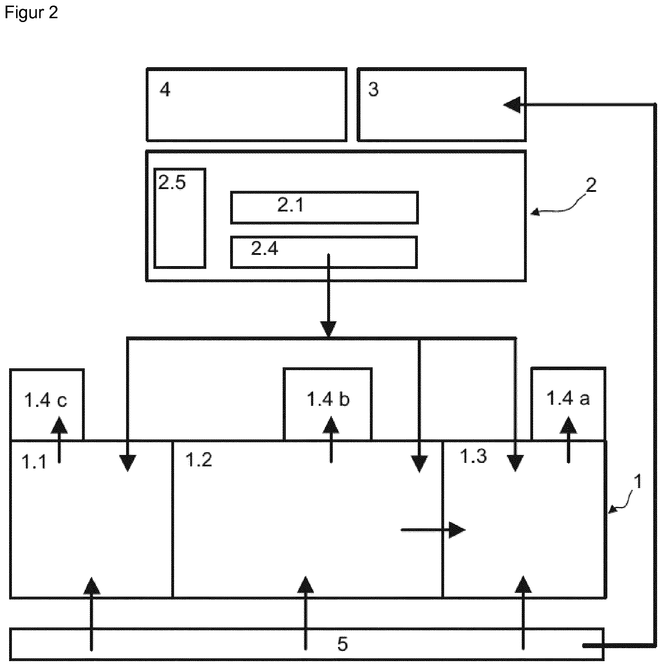

### Figur 2: Erfindungsgemäßes Produktionssystem und Bewegung von Stoffen (ohne Ladeeinheiten)

Figur 2 zeigt ebenfalls ein erfindungsgemäßes Produktionssystem in schematischer Weise. Die Figur zeigt zudem anhand von Pfeilen dargestellte typische und bevorzugt stattfindende Bewegungsabläufe von Einsatzstoffen (Rohstoffen und Zwischenprodukten) und Produkten (Formulierungen) innerhalb des Systems.

### Figur 3: Erfindungsgemäßes Produktionssystem mit Erweiterungsbereichen

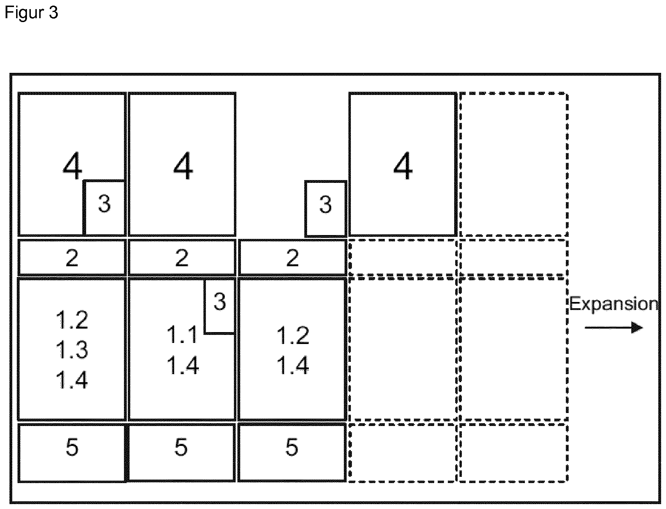

Figur 3 zeigt ebenfalls ein erfindungsgemäßes Produktionssystem in schematischer Weise, wobei hier neben einem ersten originären Bereich des Produktionssystems zudem variabel gestaltete Erweiterungsbereiche gezeigt sind, wobei die Erweiterungsbereiche jeweils Zusatzbereiche umfassen, die den einzelnen Einheiten und/oder Untereinheiten des Gesamtsystems zuzuordnen sind.

## Patentansprüche

1. Modulares Produktionssystem für Formulierungen, umfassend
(1) eine erste Einheit für die Produktion und Abfüllung von Formulierungen sowie
(2) eine mit der ersten Einheit (1) gekoppelte zweite Einheit zur Aufnahme und Auslagerung von Stückgütern (S) und Ladeeinheiten (L) sowie zur Bereitstellung von Stückgütern (S), umfassend
(2.1) eine erste Untereinheit zur Bereithaltung von leeren Ladeeinheiten (L) und mit Stückgütern befüllten Ladeeinheiten (L),
(2.2) eine Aufnahmeuntereinheit zur Aufnahme von leeren Ladeeinheiten (L) und mit Stückgütern befüllten Ladeeinheiten (L),
(2.3) eine Auslagerungsuntereinheit zur Auslagerung von leeren Ladeeinheiten (L) und mit Stückgütern befüllten Ladeeinheiten (L), sowie
(2.4) eine Bereitstellungsuntereinheit zur Bereitstellung von Stückgütern (S) für die Produktion von Formulierungen, wobei die Bereitstellungseinheit Vorrichtungen (V) besitzt,
wobei die Vorrichtungen (V)
(V.1) Mittel zum automatisierten Andocken von standardisierten Ladeeinheiten (sL),
(V.2) Mittel zur automatisierten Entnahme von definierten Mengen von in den standardisierten Ladeeinheiten (sL) vorhandenen Stückgütern und
(V.3) Mittel zur Überführung der definierten Mengen aus (V.2) in die Einheit (1),
umfassen,
wobei die zweite Einheit (2) zudem Mittel (M) für den automatisierten Transport von Ladeeinheiten innerhalb von und zwischen Einheiten und Untereinheiten des Produktionssystems umfasst, **dadurch gekennzeichnet, dass** hierdurch jedenfalls, aber nicht zwingend
ausschließlich, standardisierte Ladeeinheiten (sL), die mit Rohstoffen und Zwischenprodukten befüllt sind und in der ersten Untereinheit (2.1) bereitgehalten werden je nach aktueller Rezeptanforderung der herzustellenden Formulierung oder des herzustellenden Zwischenprodukts, zur Bereitstellungsuntereinheit (2.4) und damit den Vorrichtungen (V)transportiert werden können, um die Zuführung des jeweiligen Rohstoffs oder Zwischenprodukts zum Produktionsprozess zu ermöglichen.

2. Modulares Produktionssystem nach Anspruch 1, **dadurch gekennzeichnet, dass** die erste Einheit (1) Mittel für die Produktion und Abfüllung von Formulierungen und Zwischenprodukten umfasst.

3. Modulares Produktionssystem nach Anspruch 1 oder 2, **dadurch gekennzeichnet, dass** die erste Untereinheit (2.1) zur Bereithaltung von leeren Ladeeinheiten (L) und mit Stückgütern (S) befüllten Ladeeinheiten (L) eingerichtet ist, wobei hierbei zumindest, aber nicht zwingend ausschließlich
(i) leere Einweglieferemballagen und Mehrweglieferemballagen,
(ii) mit Formulierungen befüllte Einweglieferemballagen und Mehrweglieferemballagen,
(iii) mit Rohstoffen befüllte Originalgebinde
(iv) mit Rohstoffen befüllte standardisierte Ladeeinheiten (sL),
(v) mit Zwischenprodukten befüllte standardisierte Ladeeinheiten (sL), und
(vi) leere gereinigte standardisierte Ladeeinheiten (sL)
umfasst sind.

4. Modulares Produktionssystem nach Anspruch 1 bis 3, **dadurch gekennzeichnet, dass** die Aufnahmeuntereinheit (2.2) zur Aufnahme von leeren Ladeeinheiten (L) und mit Stückgütern (S) befüllten Ladeeinheiten (L) eingerichtet ist, wobei hierbei zumindest,
aber nicht zwingend ausschließlich
(i) leere Einweglieferemballagen und Mehrweglieferemballagen,
(ii) mit Formulierungen befüllte Einweglieferemballagen und Mehrweglieferemballagen,
(iii) mit Rohstoffen befüllte Originalgebinde
(iv) mit Rohstoffen befüllte standardisierte Ladeeinheiten (sL),
(v) mit Zwischenprodukten befüllte standardisierte Ladeeinheiten (sL),
(vi) leere gereinigte standardisierte Ladeeinheiten (sL), und
(vii) leere Originalgebinde
umfasst sind.

5. Modulares Produktionssystem nach Anspruch 1 bis 4, **dadurch gekennzeichnet, dass** die Auslagerungsuntereinheit (2.3) zur Auslagerung von leeren Ladeeinheiten (L) und mit
Stückgütern (S) befüllten Ladeeinheiten (L) eingerichtet ist, wobei hierbei zumindest, aber nicht zwingend ausschließlich
(i) leere Einweglieferemballagen und Mehrweglieferemballagen,
(ii) mit Formulierungen befüllte Einweglieferemballagen und Mehrweglieferemballagen,
(iii) mit Rohstoffen befüllte Originalgebinde,
(vi) leere gereinigte standardisierte Ladeeinheiten (sL)
(vii) leere Originalgebinde, und
(viii) leere, verschmutze standardisierte Ladeeinheiten (sL)
umfasst sind.

6. Modulares Produktionssystem nach Anspruch 1 bis 5, **dadurch gekennzeichnet, dass** es
(i) leere Einweglieferemballagen und Mehrweglieferemballagen,
(ii) mit Formulierungen befüllte Einweglieferemballagen und Mehrweglieferemballagen,
(iii) mit Rohstoffen befüllte Originalgebinde
(iv) mit Rohstoffen befüllte standardisierte Ladeeinheiten (sL),
(v) mit Zwischenprodukten befüllte standardisierte Ladeeinheiten (sL),
(vi) leere gereinigte standardisierte Ladeeinheiten (sL),
(vii) leere Originalgebinde, und
(viii) leere, verschmutze standardisierte Ladeeinheiten (sL)
enthält.

7. Modulares Produktionssystem nach Anspruch 1 bis 6, **dadurch gekennzeichnet, dass** es zudem eine an die zweite Einheit (2) gekoppelte dritte Einheit (3) zur Umfüllung von Rohstoffen aus Originalgebinden in standardisierte Ladeeinheiten (sL) umfasst.

8. Modulares Produktionssystem nach Anspruch 7, **dadurch gekennzeichnet dass** es zudem eine von den ersten, zweiten und dritten Einheiten (1, 2, 3) verschiedene vierte Einheit (4) zur Lagerung von leeren Ladeeinheiten (L) und mit Stückgütern (S) befüllten Ladeeinheiten (L) sowie zur Aufnahme und Auslagerung von leeren Ladeeinheiten (L) und mit Stückgütern (S) befüllten Ladeeinheiten (L) in das und aus dem modularen Produktionssystem aufweist.

9. Modulares Produktionssystem nach Anspruch 8, **dadurch gekennzeichnet dass** es zudem eine von den ersten, zweiten, dritten und vierten Einheiten (1, 2, 3, 4) verschiedene fünften Einheit (5) zur Lagerung von als Massengut gelieferten festen
und/oder flüssigen Rohstoffen umfasst.

10. Modulares Produktionssystem nach Anspruch 1 bis 9, **dadurch gekennzeichnet, dass** die zweite Einheit (2) zudem eine Vorbehandlungsuntereinheit (2.5) zur Vorbehandlung von Stückgütern (S) für die Produktion von Formulierungen umfasst.

11. Modulares Produktionssystem nach Anspruch 1 bis 10, **dadurch gekennzeichnet, dass** die erste Einheit (1) eine zweite Untereinheit (1.1) zur Herstellung von Zwischenprodukten unter zumindest anteiligem Einsatz fester Einsatzstoffe umfasst, welche
a. mindestens einen Prozessmischer,
b. mindestens eine in dem Prozessmischer angeordnete Mischvorrichtungen zur Dispergierung und Durchmischung von festen und flüssigen Einsatzstoffen,
c. Mittel (X1) zur Überführung fester Einsatzstoffe in den Prozessmischer, wobei die Mittel (X1) mit Mitteln (V.3) verbunden sind,
d. Mittel (X2) zur Überführung flüssiger Einsatzstoffe in den Prozessmischer, wobei die Mittel (X2) mit Mitteln (V.3) verbunden sind und wobei die Mittel (X2) mindestens eine Sammelleitung zum sequentiellen, parallelen und/oder teilweise parallelen Überführen von Einsatzstoffen in den Prozessmischer umfassen, sowie
e. bevorzugt Mittel zur Überführung von flüssigen Einsatzstoffen direkt aus großvolumigen Behältnissen wie Tanks aus der Einheit (5) in die Sammelleitung
umfasst.

12. Modulares Produktionssystem nach Anspruch 1 bis 11, **dadurch gekennzeichnet, dass** die erste Einheit (1) eine von zweiten Untereinheit (1.1) verschiedene dritte Untereinheit (1.2) zur Herstellung von Formulierungen und Zwischenprodukten unter Einsatz von flüssigen Einsatzstoffen und/oder Einsatzstoffen, die durch Vorbehandlung als flüssige Einsatzstoffe eingesetzt werden
können, umfasst, welche
a. mindestens eine Kombination aus einem Prozessmischer und einem Puffertank, wobei Prozessmischer und Puffertank Mischvorrichtungen enthalten,
b. mindestens eine fluidleitende Verbindung zwischen Prozessmischer und Puffertank zur Überführung von im Prozessmischer hergestellten Teilchargen von Formulierungen und Zwischenprodukten aus dem Prozessmischer in den Puffertank,
c. Mittel (X3) zur Überführung flüssiger Einsatzstoffe in den Prozessmischer, wobei die Mittel (X3) mit Mitteln (V.3) verbunden sind und wobei die Mittel (X3) mindestens eine Sammelleitung zum sequentiellen, parallelen und/oder teilweise parallelen Überführen von Einsatzstoffen in den Prozessmischer umfassen,
d. bevorzugt Mittel zur Überführung von flüssigen Einsatzstoffen direkt aus großvolumigen Behältnissen wie Tanks aus der Einheit (5) in die Sammelleitung,
e. mindestens eine Messeinrichtung zur Ermittlung von Eigenschaften einer im Prozessmischer hergestellten Teilcharge einer flüssigen Formulierung oder eines flüssigen Zwischenprodukts,
f. mindestens eine mit der Messeinrichtung kommunizierendeAuswerteinrichtung zur Bestimmung einer Abweichung von Eigenschaften vonim Prozessmischer hergestellten Teilchargen von den Eigenschaften eines vordefinierten Soll-Zustands,
g. mindestens eine mit der Auswerteeinheit kommunizierende Einrichtung zur Anpassung der Zuführung von Einsatzstoffen in den Prozessmischer, die dazu eingerichtet ist, unter Berücksichtigung der Abweichungen der Eigenschaften einer hergestellten Teilcharge von den Eigenschaften eines vordefiniertenSoll-Zustands sowie der Anzahl und Größe weiterer Teilchargen die zugeführten Mengen von Einsatzstoffen bei der Herstellung weiterer Teilchargen anzupassen, sowie
h. mindestens eine Weiterleitungseinheit zur Weiterleitung von Zwischenprodukten aus dem Puffertank zu mindestens einer weiteren Produktionseinheit des Produktionssystems, bevorzugt einer Untereinheit (1.3),
umfasst.

13. Modulares Produktionssystem nach Anspruch 12, **dadurch gekennzeichnet**
**dass** die erste Einheit (1) eine von den zweiten Untereinheit (1.1) und den dritten Untereinheit (1.2) verschiedene vierte Untereinheit Untereinheit (1.3) zur kontinuierlichen Herstellung von farbigen und/oder effektgebenden Formulierungen unter Einsatz von flüssigen
Einsatzstoffen und/oder Einsatzstoffen, die durch Vorbehandlung als flüssige Einsatzstoffe eingesetzt werden können, umfasst, welche
a. mindestens eine Kombination aus einem kleinvolumigen Prozessmischer (kP) und einem Puffertank, wobei Prozessmischer und Puffertank Mischvorrichtungen enthalten,
b. mindestens eine fluidleitende Verbindung zwischen Prozessmischer und Puffertank zur Überführung einer im Prozessmischer kontinuierlich hergestellten Formulierung aus dem Prozessmischer in den Puffertank,
c. Mittel (X4) zur Überführung flüssiger Zwischenprodukte enthaltend farb- und/oder effektgebende Pigmente und/oder Füllstoffe in den Prozessmischer (kP), wobei die Mittel (X4) mit Mitteln (V.3) verbunden sind,
d. mindestens eine fluidleitende Verbindung zwischen dem Prozessmischer (kP) und der dritten Untereinheit (1.2) zur Überführung von in der dritten Untereinheit (1.2) hergestellten flüssigen Zwischenprodukten,
e. mindestens eine Messeinrichtung zur Ermittlung von Eigenschaften einer im Prozessmischer (kP) kontinuierlich hergestellten flüssigen Formulierung,
f. mindestens eine mit der Messeinrichtung kommunizierendeAuswerteinrichtung zur Bestimmung einer Abweichung von Eigenschaften von einer im Prozessmischer (kP) kontinuierlich hergestellten Formulierung von den Eigenschaften eines vordefinierten Soll-Zustands, sowie
g. mindestens eine mit der Auswerteeinheit kommunizierende Einrichtung zur Anpassung der Zuführung von Einsatzstoffen in den Prozessmischer (kP), die dazu eingerichtet ist, unter Berücksichtigung der Abweichungen der Eigenschaften einer kontinuierlich hergestellten Teilmenge einer Formulierung von den Eigenschaften eines vordefinierten Soll-Zustands die zugeführten Mengen von Einsatzstoffen bei der kontinuierlichen Herstellung weiterer Teilmengen anzupassen,
umfasst.

14. Verfahren zur Herstellung von Formulierungen und Zwischenprodukten unter Einsatz des modularen Produktionssystems gemäß Anspruch 1 bis 13, wobei hierbei jedenfalls, aber nicht zwingend ausschließlich, standardisierte Ladeeinheiten (sL), die mit Rohstoffen und Zwischenprodukten befüllt sind und in der Untereinheit (2.1) bereitgehalten werden, je nach aktueller Rezeptanforderung der herzustellenden Formulierung oder des herzustellenden Zwischenprodukts, zur Bereitstellunasuntereinheit (2.4) und damit den Vorrichtungen (V) transportiert werden, um die Zuführung des jeweiligen Rohstoffs oder Zwischenprodukts zum Produktionsprozess zu ermöglichen.

15. Verfahren nach Anspruch 14, wobei das Verfahren bevorzugt zumindest die folgenden Schritte umfasst:
(1) Überführen von mit Einsatzstoffen zur Produktion von Formulierungen und/oder Zwischenprodukten befüllten standardisierten Ladeneinheiten (sL) aus der Bereithaltungsuntereinheit (2.1) in die Bereitstellungsuntereinheit (2.4) unter Einsatz der Mittel (M)
(2) Andocken der standardisierten Ladeneinheiten (sL) aus (1) an die Vorrichtungen (V), Entnahme definierter Mengen von in den standardisierten Ladeneinheiten (sL) vorhandenen Einsatzstoffen sowie Überführung dieser Mengen in die erste Einheit (1)
(3) Produktion und Abfüllung von Formulierungen und/oder Zwischenprodukten in der ersten Einheit (1) unter zumindest anteiliger Verwendung der Einsatzstoffe aus (2).

## Claims

1. Modular production system for formulations, comprising
(1) a first unit for the production and drawing-off of formulations and also
(2) a second unit coupled to the first unit (1) for the receipt and removal from storage of piece goods (S) and loading units (L) and for the provision of piece goods (S), comprising
(2.1) a first subunit for the holding of empty loading units (L) and of loading units (L) filled with piece goods,
(2.2) a receiving subunit for the receipt of empty loading units (L) and of loading units (L) filled with piece goods,
(2.3) a storage-removal subunit for the removal from storage of empty loading units (L) and of loading units (L) filled with piece goods, and also
(2.4) a provision subunit for the provision of piece goods (S) for the production of formulations, the provision unit having devices (V),
the devices (V) comprising
(V.1) means for the automated docking of standardized loading units (sL),
(V.2) means for the automated withdrawal of defined quantities of piece goods present in the standardized loading units (sL) and
(V.3) means for the transfer of the defined quantities from (V.2) to the unit (1),
the second unit (2) additionally comprising means (M) for the automated transport of loading units within and between units and subunits of the production system,
**characterized in that** as a result in any case, but not absolutely exclusively, standardized loading units (sL) filled with raw materials and intermediates and held in the first subunit (2.1) can, depending on the current recipe requirement of the formulation to be produced or of the intermediate to be produced, be transported to the provision subunit (2.4) and thus the devices (V) in order to allow the feeding of the particular raw material or intermediate to the production process.

2. Modular production system according to Claim 1, **characterized in that** the first unit (1) comprises means for the production and drawing-off of formulations and intermediates.

3. Modular production system according to Claim 1 or 2, **characterized in that** the first subunit (2.1) is set up for the holding of empty loading units (L) and of loading units (L) filled with piece goods (S), this encompassing at least, but not absolutely exclusively,
(i) empty disposable items of delivery packaging and reusable items of delivery packaging,
(ii) disposable items of delivery packaging and reusable items of delivery packaging filled with formulations,
(iii) original containers filled with raw materials,
(iv) standardized loading units (sL) filled with raw materials,
(v) standardized loading units (sL) filled with intermediates, and
(vi) empty cleaned standardized loading units (sL).

4. Modular production system according to Claims 1 to 3, **characterized in that** the receiving subunit (2.2) is set up for the receipt of empty loading units (L) and of loading units (L) filled with piece goods (S), this encompassing at least, but not absolutely exclusively,
(i) empty disposable items of delivery packaging and reusable items of delivery packaging,
(ii) disposable items of delivery packaging and reusable items of delivery packaging filled with formulations,
(iii) original containers filled with raw materials,
(iv) standardized loading units (sL) filled with raw materials,
(v) standardized loading units (sL) filled with intermediates,
(vi) empty cleaned standardized loading units (sL), and
(vii) empty original containers.

5. Modular production system according to Claims 1 to 4, **characterized in that** the storage-removal subunit (2.3) is set up for the removal from storage of empty loading units (L) and of loading units filled with piece goods (S), this encompassing at least, but not absolutely exclusively,
(i) empty disposable items of delivery packaging and reusable items of delivery packaging,
(ii) disposable items of delivery packaging and reusable items of delivery packaging filled with formulations,
(iii) original containers filled with raw materials,
(vi) empty cleaned standardized loading units (sL),
(vii) empty original containers, and
(viii) empty soiled standardized loading units (sL).

6. Modular production system according to Claims 1 to 5, which contains
(i) empty disposable items of delivery packaging and reusable items of delivery packaging,
(ii) disposable items of delivery packaging and reusable items of delivery packaging filled with formulations,
(iii) original containers filled with raw materials,
(iv) standardized loading units (sL) filled with raw materials,
(v) standardized loading units (sL) filled with intermediates,
(vi) empty cleaned standardized loading units (sL),
(vii) empty original containers, and
(viii) empty soiled standardized loading units (sL).

7. Modular production system according to Claims 1 to 6, which additionally comprises a third unit (3), coupled to the second unit (2), for the refilling of raw materials from original containers into standardized loading units (sL) .

8. Modular production system according to Claim 7, which additionally comprises a fourth unit (4), different from the first, second and third units (1, 2, 3), for the storage of empty loading units (L) and of loading units (L) filled with piece goods (S) and for the receipt and removal from storage of empty loading units (L) and of loading units (L) filled with piece goods (S) into the and out of the modular production system.

9. Modular production system according to Claim 8, which additionally comprises a fifth unit (5), different from the first, second, third and fourth units (1, 2, 3, 4), for the storage of solid and/or fluid raw materials delivered as bulk good.

10. Modular production system according to Claims 1 to 9, **characterized in that** the second unit (2) additionally comprises a pretreatment subunit (2.5) for the pretreatment of piece goods (S) for the production of formulations.

11. Modular production system according to Claims 1 to 10, **characterized in that** the first unit (1) comprises a second subunit (1.1) for the production of intermediates with at least proportional use of solid input materials, comprising
a. at least one process mixer,
b. at least one mixing device, arranged in the process mixer, for the dispersion and mixing of solid and fluid input materials,
c. means (X1) for the transfer of solid input materials to the process mixer, the means (X1) being connected to means (V.3),
d. means (X2) for the transfer of fluid input materials to the process mixer, the means (X2) being connected to means (V.3) and the means (X2) comprising at least one collection line for the sequential, parallel and/or partly parallel transfer of input materials to the process mixer, and
e. preferably means for the transfer of fluid input materials directly from large-volume receptacles such as tanks from the unit (5) to the collection line.

12. Modular production system according to Claims 1 to 11, **characterized in that** the first unit (1) comprises a third subunit (1.2), different from the second subunit (1.1), for the production of formulations and intermediates using fluid input materials and/or input materials which can be used as fluid input materials as a result of pretreatment, comprising
a. at least one combination of a process mixer and a buffer tank, with process mixer and buffer tank containing mixing devices,
b. at least one fluid-conducting connection between process mixer and buffer tank for the transfer of sub-batches of formulations and intermediates, as produced in the process mixer, from the process mixer to the buffer tank,
c. means (X3) for the transfer of fluid input materials to the process mixer, the means (X3) being connected to means (V.3) and the means (X3) comprising at least one collection line for the sequential, parallel and/or partly parallel transfer of input materials to the process mixer,
d. preferably means for the transfer of fluid input materials directly from large-volume receptacles such as tanks from the unit (5) to the collection line,
e. at least one measuring device for the determination of properties of a sub-batch of a fluid formulation or of a fluid intermediate, as produced in the process mixer,
f. at least one evaluation device, communicating with the measuring device, for the determination of a deviation of properties of sub-batches produced in the process mixer from the properties of a predefined target state,
g. at least one device, communicating with the evaluation unit, for the adjustment of the feeding of input materials into the process mixer, which device is set up to take into account the deviations of the properties of a produced sub-batch from the properties of a predefined target state and to take into account the number and size of further sub-batches in order to adjust the fed quantities of input materials in the production of further sub-batches, and
h. at least one forwarding unit for the forwarding of intermediates from the buffer tank to at least one further production unit of the production system, preferably a subunit (1.3).

13. Modular production system according to Claim 12, **characterized in that** the first unit (1) comprises a fourth subunit (1.3), different from the second subunit (1.1) and the third subunit (1.2), for the continuous production of colored and/or effect-giving formulations using fluid input materials and/or input materials which can be used as fluid input materials as a result of pretreatment, comprising
a. at least one combination of a small-volume process mixer (kP) and a buffer tank, with process mixer and buffer tank containing mixing devices,
b. at least one fluid-conducting connection between process mixer and buffer tank for the transfer of a formulation continuously produced in the process mixer from the process mixer to the buffer tank,
c. means (X4) for the transfer of fluid intermediates containing coloring and/or effect-giving pigments and/or fillers to the process mixer (kP), the means (X4) being connected to means (V.3),
d. at least one fluid-conducting connection between the process mixer (kP) and the third subunit (1.2) for the transfer of fluid intermediates produced in the third unit (1.2),
e. at least one measuring device for the determination of properties of a fluid formulation continuously produced in the process mixer (kP),
f. at least one evaluation device, communicating with the measuring device, for the determination of a deviation of properties of a formulation continuously produced in the process mixer (kP) from the properties of a predefined target state, and
g. at least one device, communicating with the evaluation unit, for the adjustment of the feeding of input materials into the process mixer (kP), which device is set up to take into account the deviations of the properties of a continuously produced subquantity of a formulation from the properties of a predefined target state in order to adjust the fed quantities of input materials in the continuous production of further subquantities.

14. Process for producing formulations and intermediates using the modular production system according to Claims 1 to 13, wherein here in any case, but not absolutely exclusively, standardized loading units (sL) filled with raw materials and intermediates and held in the subunit (2.1) can, depending on the current recipe requirement of the formulation to be produced or of the intermediate to be produced, be transported to the provision subunit (2.4) and thus the devices (V) in order to allow the feeding of the particular raw material or intermediate to the production process.

15. Process according to Claim 14, wherein the process preferably comprises at least the following steps:
(1) transferring standardized loading units (sL), filled with input materials for the production of formulations and/or intermediates, from the holding subunit (2.1) to the provision subunit (2.4) using the means (M)
(2) docking the standardized loading units (sL) from (1) to the devices (V), withdrawing defined quantities of input materials present in the standardized loading units (sL), and transferring said quantities to the first unit (1)
(3) producing and drawing off formulations and/or intermediates in the first unit (1) with at least proportional use of the input materials from (2).

## Revendications

1. Système de production modulaire pour formulations, comprenant
(1) une première unité pour la production et le remplissage de formulations ainsi que
(2) une deuxième unité couplée à la première unité (1) pour la réception et l'évacuation de matériaux en vrac (S) et d'unités de chargement (L) ainsi que pour la fourniture de matériaux en vrac (S), comprenant
(2.1) une première sous-unité pour la mise à disposition d'unités de chargement vides (L) et d'unités de chargement (L) remplies de matériaux en vrac,
(2.2) une sous-unité de réception pour la réception d'unités de chargement vides (L) et d'unités de chargement (L) remplies de matériaux en vrac,
(2.3) une sous-unité d'évacuation pour l'évacuation d'unités de chargement vides (L) et d'unités de chargement (L) remplies de matériaux en vrac, ainsi que
(2.4) une sous-unité de fourniture pour la fourniture de matériaux en vrac (S) pour la production de formulations, l'unité de fourniture comportant des dispositifs (V),
les dispositifs (V) comprenant
(V.1) des moyens pour l'amarrage automatisé d'unités de chargement standardisées (SL),
(V.2) des moyens pour le prélèvement automatisé de quantités définies de matériaux en vrac présents dans les unités de chargement standardisées (sL) et
(V.3) des moyens pour le transfert des quantités définies de (V.2) dans l'unité (1),
la deuxième unité (2) comprenant en outre des moyens (M) pour le transport automatisé d'unités de chargement à l'intérieur et entre des unités et sous-unités du système de production, **caractérisé en ce que** par ce biais, en tout cas mais pas nécessairement exclusivement, des unités de chargement standardisées (sL), qui sont remplies de matières premières et de produits intermédiaires et qui sont mises à disposition dans la première sous-unité (2.1) peuvent être transportées, en fonction de la demande de recette actuelle de la formulation à fabriquer ou du produit intermédiaire à fabriquer, vers la sous-unité de fourniture (2.4) et ainsi vers les dispositifs (V) afin de permettre l'introduction de la matière première respective ou du produit intermédiaire respectif dans le processus de production.

2. Système de production modulaire selon la revendication 1, **caractérisé en ce que** la première unité (1) comprend des moyens pour la production et le remplissage de formulations et de produits intermédiaires.

3. Système de production modulaire selon la revendication 1 ou 2, **caractérisé en ce que** la première sous-unité (2.1) est conçue pour la mise à disposition d'unités de chargement vides (L) et d'unités de chargement (L) remplies de matériaux en vrac (S), au moins, mais pas nécessairement exclusivement,
(i) des emballages de livraison à usage unique et des emballages de livraison réutilisables vides,
(ii) des emballages de livraison à usage unique et des emballages de livraison réutilisables remplis de formulations,
(iii) des récipients d'origine remplis de matières premières,
(iv) des unités de chargement standardisées (sL) remplies de matières premières,
(v) des unités de chargement standardisées (sL) remplies de produits intermédiaires, et
(vi) des unités de chargement standardisées (sL) vides nettoyées
étant compris.

4. Système de production modulaire selon les revendications 1 à 3, **caractérisé en ce que** la sous-unité de réception (2.2) est conçue pour la réception d'unités de chargement vides (L) et d'unités de chargement (L) remplies de matériaux en vrac (S), au moins, mais pas nécessairement exclusivement,
(i) des emballages de livraison à usage unique et des emballages de livraison réutilisables vides,
(ii) des emballages de livraison à usage unique et des emballages de livraison réutilisables remplis de formulations,
(iii) des récipients d'origine remplis de matières premières,
(iv) des unités de chargement standardisées (sL) remplies de matières premières,
(v) des unités de chargement standardisées (sL) remplies de produits intermédiaires,
(vi) des unités de chargement standardisées (sL) vides nettoyées, et
(vii) des récipients d'origine vides
étant compris.

5. Système de production modulaire selon les revendications 1 à 4, **caractérisé en ce que** la sous-unité d'évacuation (2.3) est conçue pour l'évacuation d'unités de chargement vides (L) et d'unités de chargement (L) remplies de matériaux en vrac (S), au moins, mais pas nécessairement exclusivement,
(i) des emballages de livraison à usage unique et des emballages de livraison réutilisables vides,
(ii) des emballages de livraison à usage unique et des emballages de livraison réutilisables remplis de formulations,
(iii) des récipients d'origine remplis de matières premières,
(vi) des unités de chargement standardisées (sL) vides nettoyées,
(vii) des récipients d'origine vides, et
(viii) des unités de chargement standardisées (sL) vides sales
étant compris.

6. Système de production modulaire selon les revendications 1 à 5, **caractérisé en ce qu'**il contient
(i) des emballages de livraison à usage unique et des emballages de livraison réutilisables vides,
(ii) des emballages de livraison à usage unique et des emballages de livraison réutilisables remplis de formulations,
(iii) des récipients d'origine remplis de matières premières,
(iv) des unités de chargement standardisées (sL) remplies de matières premières,
(v) des unités de chargement standardisées (sL) remplies de produits intermédiaires,
(vi) des unités de chargement standardisées (sL) vides nettoyées,
(vii) des récipients d'origine vides, et
(viii) des unités de chargement standardisées (sL) vides sales.

7. Système de production modulaire selon les revendications 1 à 6, **caractérisé en ce qu'**il comprend en outre une troisième unité (3) couplée à la deuxième unité (2) pour le transvasement de matières premières de récipients d'origine dans des unités de chargement standardisées (sL).

8. Système de production modulaire selon la revendication 7, **caractérisé en ce qu'**il comprend en outre une quatrième unité (4) différente des première, deuxième et troisième unités (1, 2, 3) pour le stockage d'unités de chargement vides (L) et d'unités de chargement (L) remplies de matériaux en vrac (S), ainsi que pour la réception et l'évacuation d'unités de chargement vides (L) et d'unités de chargement (L) remplies de matériaux en vrac (S) dans et hors du système de production modulaire.

9. Système de production modulaire selon la revendication 8, **caractérisé en ce qu'**il comprend en outre une cinquième unité (5) différente des première, deuxième, troisième et quatrième unités (1, 2, 3, 4) pour le stockage de matières premières solides et/ou liquides livrées en vrac.

10. Système de production modulaire selon les revendications 1 à 9, **caractérisé en ce que** la deuxième unité (2) comprend en outre une sous-unité de prétraitement (2.5) pour le prétraitement de matériaux en vrac (S) pour la production de formulations.

11. Système de production modulaire selon les revendications 1 à 10, **caractérisé en ce que** la première unité (1) comprend une deuxième sous-unité (1.1) pour la fabrication de produits intermédiaires en utilisant au moins en partie des matières d'alimentation solides, qui comprend
a. au moins un mélangeur de processus,
b. au moins un dispositif de mélange agencé dans le mélangeur de processus pour la dispersion et le mélange de matières d'alimentation solides et liquides,
c. des moyens (X1) pour le transfert de matières d'alimentation solides dans le mélangeur de processus, les moyens (X1) étant reliés à des moyens (V.3),
d. des moyens (X2) pour le transfert de matières d'alimentation liquides dans le mélangeur de processus, les moyens (X2) étant reliés à des moyens (V.3) et les moyens (X2) comprenant au moins une conduite de collecte pour le transfert séquentiel, parallèle et/ou partiellement parallèle de matières d'alimentation dans le mélangeur de processus, ainsi que
e. de préférence des moyens pour le transfert de matières d'alimentation liquides directement à partir de récipients de grand volume tels que des réservoirs de l'unité (5) dans la conduite de collecte.

12. Système de production modulaire selon les revendications 1 à 11, **caractérisé en ce que** la première unité (1) comprend une troisième sous-unité (1.2) différente de la deuxième sous-unité (1.1) pour la fabrication de formulations et de produits intermédiaires en utilisant des matières d'alimentation liquides et/ou des matières d'alimentation qui par prétraitement peuvent être utilisées sous forme de matières d'alimentation liquides, qui comprend
a. au moins une combinaison d'un mélangeur de processus et d'un réservoir tampon, le mélangeur de processus et le réservoir tampon contenant des dispositifs de mélange,
b. au moins une liaison fluidique entre le mélangeur de processus et le réservoir tampon pour le transfert de lots partiels de formulations et de produits intermédiaires fabriqués dans le mélangeur de processus du mélangeur de processus dans le réservoir tampon,
c. des moyens (X3) pour le transfert de matières d'alimentation liquides dans le mélangeur de processus, les moyens (X3) étant reliés à des moyens (V.3) et les moyens (X3) comprenant au moins une conduite de collecte pour le transfert séquentiel, parallèle et/ou partiellement parallèle de matières d'alimentation dans le mélangeur de processus,
d. de préférence des moyens pour le transfert de matières d'alimentation liquides directement à partir de récipients de grand volume tels que des réservoirs de l'unité (5) dans la conduite de collecte,
e. au moins un appareil de mesure pour déterminer des propriétés d'un lot partiel d'une formulation liquide ou d'un produit intermédiaire liquide fabriqué dans le mélangeur de processus,
f. au moins un appareil d'évaluation communiquant avec l'appareil de mesure pour déterminer un écart entre des propriétés de lots partiels fabriqués dans le mélangeur de processus et des propriétés d'un état de consigne prédéfini,
g. au moins un appareil communiquant avec l'unité d'évaluation pour l'adaptation de l'introduction de matières d'alimentation dans le mélangeur de processus, qui est conçu pour adapter les quantités de matières d'alimentation introduites lors de la fabrication d'autres lots partiels en tenant compte des écarts entre les propriétés d'un lot partiel fabriqué et les propriétés d'un état de consigne prédéfini ainsi que du nombre et de la taille d'autres lots partiels, ainsi que
h. au moins une unité d'acheminement pour l'acheminement de produits intermédiaires du réservoir tampon vers au moins une autre unité de production du système de production, de préférence une sous-unité (1.3) .

13. Système de production modulaire selon la revendication 12, **caractérisé en ce que** la première unité (1) comprend une quatrième sous-unité (1.3) différente de la deuxième sous-unité (1.1) et de la troisième sous-unité (1.2) pour la fabrication continue de formulations colorées et/ou à effet en utilisant des matières d'alimentation liquides et/ou des matières d'alimentation qui par prétraitement peuvent être utilisées sous forme de matières d'alimentation liquides, qui comprend
a. au moins une combinaison d'un mélangeur de processus de petit volume (kP) et d'un réservoir tampon, le mélangeur de processus et le réservoir tampon contenant des dispositifs de mélange,
b. au moins une liaison fluidique entre le mélangeur de processus et le réservoir tampon pour le transfert d'une formulation fabriquée en continu dans le mélangeur de processus du mélangeur de processus dans le réservoir tampon,
c. des moyens (X4) pour le transfert de produits intermédiaires liquides contenant des pigments colorants et/ou à effet et/ou des charges dans le mélangeur de processus (kP), les moyens (X4) étant reliés à des moyens (V.3),
d. au moins une liaison fluidique entre le mélangeur de processus (kP) et la troisième sous-unité (1.2) pour le transfert de produits intermédiaires liquides fabriqués dans la troisième sous-unité (1.2),
e. au moins un appareil de mesure pour déterminer des propriétés d'une formulation liquide fabriquée en continu dans le mélangeur de processus (kP),
f. au moins un appareil d'évaluation communiquant avec l'appareil de mesure pour déterminer un écart entre des propriétés d'une formulation fabriquée en continu dans le mélangeur de processus (kP) et les propriétés d'un état de consigne prédéfini, ainsi que
g. au moins un appareil communiquant avec l'unité d'évaluation pour adapter l'introduction de matières d'alimentation dans le mélangeur de processus (kP), qui est conçu pour adapter les quantités de matières d'alimentation introduites lors de la fabrication continue d'autres quantités partielles en tenant compte des écarts entre les propriétés d'une quantité partielle d'une formulation fabriquée en continu et les propriétés d'un état de consigne prédéfini.

14. Procédé de fabrication de formulations et de produits intermédiaires en utilisant le système de production modulaire selon les revendications 1 à 13, dans lequel, en tout cas, mais pas nécessairement exclusivement, des unités de chargement standardisées (sL) qui sont remplies de matières premières et de produits intermédiaires et sont mises à disposition dans la sous-unité (2.1) sont transportées, en fonction de la demande de recette actuelle de la formulation à fabriquer ou du produit intermédiaire à fabriquer, vers la sous-unité de fourniture (2.4) et ainsi vers les dispositifs (V) afin de permettre l'introduction de la matière première respective ou du produit intermédiaire respectif vers le processus de production.

15. Procédé selon la revendication 14, dans lequel le procédé comprend de préférence au moins les étapes suivantes :
(1) le transfert d'unités de chargement standardisées (sL) remplies de matières premières pour la production de formulations et/ou de produits intermédiaires de la sous-unité de mise à disposition (2.1) à la sous-unité de fourniture (2.4) en utilisant les moyens (M),
(2) l'amarrage des unités de chargement standardisées (sL) de (1) aux dispositifs (V), le prélèvement de quantités définies de matières d'alimentation présentes dans les unités de chargement standardisées (sL) ainsi que le transfert de ces quantités dans la première unité (1),
(3) la production et le remplissage de formulations et/ou de produits intermédiaires dans la première unité (1) en utilisant au moins en partie les matières d'alimentation de (2).
